# NEUE EUROPÄISCHE PATENTSCHRIFT

(11) **EP 3 717 794 B2**
(45) Veröffentlichungstag und Bekanntmachung des Hinweises auf die Entscheidung über den Einspruch: **20.08.2025**
(45) Hinweis auf die Patenterteilung: 06.10.2021
(21) Anmeldenummer: 18814491.9
(22) Anmeldetag: 15.11.2018
(51) Int. Cl.: F16F 15/027

(54) **SCHWINGMASCHINE UND VERFAHREN ZUM BETREIBEN EINER SCHWINGMASCHINE**
VIBRATORY MACHINE AND METHOD FOR OPERATING A VIBRATORY MACHINE
MACHINE VIBRANTE ET PROCÉDÉ SERVANT À FAIRE FONCTIONNER UNE MACHINE VIBRANTE

(30) Priorität: 29.11.2017 DE 102017128230
(43) Veröffentlichungstag der Anmeldung: 07.10.2020
(73) Patentinhaber: Spaleck GmbH & Co. Kommanditgesellschaft, 46397 Bocholt (DE)
(72) Erfinder: HALLADIN, Jörg, 46397 Bocholt (DE); LOHSCHELLER, Niklas, 46414 Rhede (DE)
(74) Vertreter: Schulze Horn, Kathrin
(86) Internationale Anmeldenummer: PCT/EP2018/081330
(87) Internationale Veröffentlichungsnummer: WO 2019/105744

(56) Entgegenhaltungen:
- EP-A1- 3 034 905
- WO-A1-03/089806
- DE-A1- 2 357 838
- DE-A1- 4 233 212

## Beschreibung

Die Erfindung betrifft eine Schwingmaschine mit einem in deren Betrieb schwingenden ersten Maschinenteil, mit einem mit einer Aufstellfläche der Schwingmaschine verbundenen zweiten Maschinenteil und mit einem Schwingantrieb, wobei zwischen den Maschinenteilen eine federnde Lagereinrichtung angeordnet ist, die pro Lagerungspunkt wenigstens eine Luftfeder und mindestens einen mit der Luftfeder strömungsverbundenen Druckluftbehälter aufweist und wobei zwischen die Luftfeder und den Druckluftbehälter eine Drossel geschaltet ist. Außerdem betrifft die Erfindung ein Verfahren zum Betreiben einer Schwingmaschine.

Bei Schwingmaschinen, wie Siebmaschinen oder Schwingförderer, mit einem in deren Betrieb schwingenden ersten Maschinenteil wird letzterer auf Federn gelagert. Um die Übertragung von dynamischen Lasten auf den mit der Aufstellfläche der Schwingmaschine verbundenen zweiten Maschinenteil und auf den die Aufstellfläche bildenden Untergrund zu minimieren, wird die Eigenfrequenz der Lagereinrichtung möglichst niedrig und unterhalb der Betriebsfrequenz des schwingenden ersten Maschinenteils gewählt.

Die Schwingmaschine kann auch ohne einen zweiten, nicht schwingenden Maschinenteil ausgeführt sein, wobei dann der schwingende Maschinenteil unter Zwischenlage der Lagereinrichtung auf einem ortsfesten Maschinenfundament, z. B. aus Beton, angeordnet sein kann.

Beim An- und Ablaufen der Schwingmaschine wird aufgrund der hohen Massen und großen Trägheit des schwingenden ersten Maschinenteils die Eigenfrequenz der federnden Lagereinrichtung relativ langsam durchlaufen. Dabei kommt es zu hohen Auslenkungen des schwingenden ersten Maschinenteils und entsprechend hohen dynamischen Lasten. Die Schwingmaschine mit der Lagereinrichtung und umgebende Strukturen auf der Aufstellfläche werden dabei stark belastet. In der Lagereinrichtung werden in der Regel Schraubendruckfedern aus Stahl oder Luftfedern verwendet. Deren Eigendämpfung ist aber nachteilig gering und daher für eine Vermeidung der hohen Auslenkungen des schwingenden ersten Maschinenteils beim An- und Ablaufen der Schwingmaschine technisch nicht nutzbar. Der Dämpfungsgrad, auch Lehrsches Dämpfungsmaß genannt, beträgt bei Stahlfedern etwa 0,009 oder 0,9% und bei herkömmlichen Luftfedern etwa 0,012 oder 1,2%. Beide Dämpfungsmaße sind für eine wirksame Dämpfung und Vermeidung der hohen Auslenkungen des schwingenden ersten Maschinenteils beim An- und Ablaufen der Schwingmaschine unzureichend.

Aus der einschlägigen Praxis sind verschiedene Lösungen bekannt, die das unerwünschte Aufschwingen des ersten Maschinenteils der Schwingmaschine bei An- und Ablauf minimieren sollen. Eine Lösung besteht darin, durch starkes Beschleunigen und Verzögern der Drehzahl des Schwingantriebs das Aufschwingen zu begrenzen. Aufgrund der generell hohen Trägheit der Schwingantriebe ist dieser Weg aber nur begrenzt wirksam.

Ein Einsatz von Fluiddämpfern ist nur in wenigen Fällen sinnvoll. Nachteilig ist hier die auch im Betrieb wirkenden Dämpfung der Fluiddämpfer, welche energetisch betrachtet ineffizient und mit geringerer Isolation während des Betriebes verbunden ist. Weiter hat sich herausgestellt, dass die Lebensdauer der Fluiddämpfer unter den üblichen Umgebungsbedingungen von Schwingmaschinen nicht zufriedenstellend ist.

In der Praxis verbreitet ist auch eine Lagerung des schwingenden ersten Maschinenteils auf Gummielementen, jedoch ist diese Art von Lagerung nachteilig auf niedrige Schwingweiten begrenzt. Die natürliche Dämpfung von Gummielemente ist bei geringen Auslenkungen ausreichend. Die Eigen- oder Resonanzfrequenz einer Gummielementelagerung liegt mit 6 bis 9 Hz allerdings relativ hoch und so werden nur bei Schwingmaschinen mit Betriebsfrequenzen ab etwa 16 Hz und höher annehmbare Isolationsgrade erreicht. Zu der Einschränkung der Schwingweite kommt damit zusätzlich eine Beschränkung auf den Einsatz bei Schwingmaschinen mit hoher Betriebsfrequenz.

Bei großen Schwingmaschinen und/oder bei hohem Anspruch an die Isolation zur Umgebung werden Zwei-Massen-Systeme eingesetzt. Durch Tilgungseffekte werden die Kräfte, die auf die Aufstellungsfläche und die Umgebung bei An- und Ablauf der Schwingmaschine wirken, gemindert. Die hohe Auslenkung des ersten, schwingenden Maschinenteils der Schwingmaschine wird durch einen solchen Aufbau aber nicht unterbunden. Da die zusätzliche Masse des Zwei-Massen-Systems mindestens die Hälfte, idealerweise das Zwei- bis Dreifache, der Masse der Schwingmaschine betragen muss, um einen wirksamen Effekt zu erzielen, und da der Aufbau Zwei-Massen-Systems den Zugang zur Schwingmaschine erschwert, ist diese Lösung mit Nachteilen bei der Wirtschaftlichkeit und Wartungsfreundlichkeit der Schwingmaschine verbunden.

Das Dokument DE 23 57 838 A1 zeigt eine schwingungsisolierende Lagereinrichtung für eine Maschine, mit einer Kombination von Gummi- oder Metallfedern mit jeweils zugeordneter Luftfeder. Die Luftfeder ist in der Figur 3 dieses Dokuments dargestellt und in der zugehörigen Figurenbeschreibung erläutert. Danach besitzt die Luftfeder eine erste, von einem elastischen Balg gebildete Luftkammer und eine durch starre Wandteile gebildete zweite Luftkammer. Die Luftkammern stehend über eine "kleine Öffnung", d.h. eine Drossel, in einem die Kammern trennenden Wandteil miteinander in Strömungsverbindung. Über einen Kanal oder Leitungen mit Druckreglern kann der Druck in den Luftfedern eingestellt und verändert werden.

Das Dokument EP 3 034 905 A1 zeigt ein Federsystem aus einem Luftfedersystem und einem mechanischen Federsystem. Die Luftfedern sind mit Druckmesssensoren ausgestattet, die Messsignal an eine Steuer- und Regeleinheit liefern. Die Steuer- und Regeleinheit stellt über verstellbare Ventile den Luftdruck in jeder Luftfeder ein, vorzugsweise derart, dass das Höhenniveau der Last im Betrieb konstant gehalten wird. Für die Aufnahme der größeren Grundlast dienen die Federn des mechanischen Federsystems; die Federn des Luftfedersystems dienen nur zur Aufnahme der zu erwartenden, geringeren Laständerungen. Zur Dämpfung des Federsystems ist ein Viskositätsdämpfungssystem mit Hydraulikdämpfern vorgesehen.

Das Dokument DE 42 33 212 A1 zeigt ein Federsystem zur Isolierung von Maschinenteilen und Messgeräten von einer Unterlage, wobei das Federsystem hier dazu dient, die Maschinenteile oder Messgeräte gegen einwirkende Schwingungen aus der Umgebung zu isolieren. Dabei ist das Federsystem in seiner Steifigkeit zwischen "hart" und "weich" umschaltbar und/oder es können unterschiedlich große Dämpfungen wirksam gemacht werden. In der Figur 1 dieses Dokuments ist eine Luftfeder dargestellt, die einen ersten, von der Last beaufschlagten, durch einen Balg begrenzten Raum und einen damit über eine Drossel verbundenen zweiten Raum aufweist. Die Drossel ist nicht verstellbar und die unterschiedlichen Steifigkeiten werden durch mindestens eine zuschaltbare mechanische Feder oder Flüssigkeitsfeder bewirkt.

Das Dokument WO 03/089806 A1 zeigt eine Isolationsfeder und ein Federstützsystem zum Tragen einer Last, die in einem ersten Modus und einem zweiten Modus arbeiten können, umfassend eine Luftfeder, die mit einem tragenden Schaft verbunden ist, und ein hydraulisches Dämpfungselement mit einer ersten Kammer und einer zweiten Kammer, welche durch einen Kolben getrennt sind, der mit dem tragenden Schaft verbunden ist. Eine Hydraulikleitung hat ein Ventil, mit dem ein Ende der Hydraulikleitung verbunden ist. Die erste Kammer und das andere Ende der Hydraulikleitung sind mit der zweiten Kammer verbunden. Ein Schwingungsdetektor ist mit dem Ventil verbunden, um das Ventil beim Auftreten von nicht normalen Schwingungen zu betätigen, wobei in einer ersten Betriebsart die Last über einen Lastpfad durch das hydraulische Dämpfungselement starr am Boden befestigt ist und wobei in einem zweiten Modus die Last durch die Luftfederfeder isoliert und durch das hydraulische Dämpfungselement gedämpft ist.

Das Dokument DE 20 2012 003 315 U1 zeigt eine Siebmaschine zum Klassieren oder Aufbereiten von Kies, Sand oder anderem Schüttgut, mit einem Antrieb zum Erzeugen einer Rüttelbewegung, wobei die Siebmaschine auf wenigstens einem Luftbalg gelagert ist. Bevorzugt ist weiter eine Vorrichtung zum Befüllen der Luftbälge vorgesehen ist, mittels derer der Druck in einzelnen Luftbälgen unterschiedlich hoch einstellbar ist. Die Siebmaschine kann eine Steuerung oder Regelung umfassen, mit der der Druck in wenigstens einem Luftbalg während des Betriebs der Siebmaschine automatisch variiert werden kann. Außerdem ist bei dieser Siebmaschine bevorzugt vorgesehen, dass sie keine Bremse zum Abbremsen der Siebmaschine aufweist. Durch die Wahl des Luftdrucks in den Luftbälgen lässt sich zwar einerseits die Arbeitshöhe und andererseits die Neigung der Siebmaschine variieren, jedoch können bei dieser bekannten Siebmaschine die beim An- und Ablaufen der Maschine auftretenden hohen Auslenkungen des schwingenden Maschinenteils aufgrund des geringen Dämpfungsgrades der Luftbälge nicht wirksam begrenzt werden, insbesondere wenn, wie in dem Dokument ausdrücklich als bevorzugt angegeben, keine Bremse zum Abbremsen der Siebmaschine vorgesehen ist. Wie eine gegebenenfalls doch vorgesehene Bremse zum Abbremsen der Siebmaschine ausgeführt sein könnte, geht aus dem Dokument nicht hervor.

Aus dem Dokument DE 24 27 907 C2 geht eine Schwingmaschine, beispielsweise ein Schwingförderer oder ein anderes schwingendes Gerät zur Förderung von Material oder zum Klassieren, Mischen oder Sortieren von Materialien, der eingangs genannten Art hervor. Die Schwingmaschine weist einen ersten Maschinenteil auf, der auf Trag-Luftfedern gelagert ist und der durch exzentrische Gewichte in Schwingung versetzt wird, die auf einer am ersten Maschinenteil gelagerten Welle befestigt sind. Die Welle ist in der Nähe des Schwerpunkts des ersten Maschinenteils angeordnet und wird von einem am ersten Maschinenteil angeordneten Motor angetrieben. Die zuvor erwähnten Trag-Luftfedern dienen hier allein zur schwingfähigen Lagerung des ersten Maschinenteils. Wesentlich befasst sich dieses Dokument aber mit einer Vorrichtung zum Einstellen der Schwingungen des schwingend angetriebenen Maschinenteils. Dazu ist an dem ersten, schwingend angetriebenen Maschinenteil mindestens ein gesondertes Schwingsystem angeordnet, welches solche linearen Schwingungen von einstellbarer Amplitude und Frequenz ausführt, dass die Schwingungen des ersten Maschinenteils in bestimmten Richtungen gedämpft oder verstärkt werden. Bevorzugt sind am ersten Maschinenteil mindestens zwei gesonderte Schwingsysteme unter verschiedenen Winkeln angeordnet, die lineare Schwingungen in unterschiedlichen Richtungen ausführen. Bevorzugt besteht jedes Schwingsystem aus einer am ersten Maschinenteil beweglich gehaltenen Schwingmasse und je einer Schwingsystem-Luftfeder an den gegenüberliegenden Seiten der Schwingmasse. Dabei besteht bevorzugt jedes Schwingsystem aus zwei gesonderten Schwingmassen mit Schwingsystem-Luftfedern an ihren gegenüberliegenden Seiten. Der Luftdruck in den Schwingsystem-Luftfedern der Vorrichtung zum Einstellen der Schwingungen des schwingend angetriebenen Maschinenteils ist einstellbar. Im Hinblick auf die Trag-Luftfedern offenbart dieses Dokument lediglich, dass sich aufgrund eines Ablassens der Luft aus den Trag-Luftfedern ein Schaden ergeben könnte und dass daher die Trag-Luftfedern durch einen Druckschalter überwacht werden, der zum Anhalten des Motors vorgesehen ist, falls ein Abfall des Aufblasdrucks in den Trag-Luftfedern auftritt.

Die aus dem Dokument DE 24 27 907 C2 bekannte Schwingmaschine besitzt einen erkennbar aufwendigen und komplizierten technischen Aufbau mit zum einen Trag-Luftfedern, auf denen der erste, im Betrieb schwingende Maschinenteil gelagert ist, und mit zum anderen Schwingsystem-Luftfedern und damit zusammenwirkenden Schwingmassen, die Teil der Vorrichtung zum Einstellen der Schwingungen des schwingend angetriebenen Maschinenteils sind. Auf die Problematik eines Aufschwingens des ersten, im Betrieb schwingenden Maschinenteils beim An- und Ablaufen der Schwingmaschine geht dieses Dokument nicht ein.

Das Dokument DE 20 2015 106 653 U1 zeigt eine Siebmaschine zur größenabhängigen Trennung von Schüttgütern, umfassend einen Siebkasten, welcher mit zumindest einer Siebfläche zum Sieben von Schüttgut versehen ist, sowie eine Antriebseinheit, mittels welcher der Siebkasten in Schwingung versetzbar ist, wobei der Siebkasten zumindest einen Auflageabschnitt aufweist, über welchen Auflageabschnitt der Siebkasten über zumindest ein die Kompressibilität von Gasen ausnützendes Federungselement an einem Untergrund gelagert ist und wobei das zumindest eine Federungselement mit zumindest einer Rückschlagarmatur versehen ist, um ein schlagartiges Entweichen von Gas aus dem Federungselement zu verhindern. Bevorzugt ist hier das Federungselement durch zumindest einen Luftfederbalg ausgebildet und der zumindest eine Luftfederbalg mit einer Luftzuleitung verbunden. Weiter ist hier vorzugsweise vorgesehen, dass der zumindest eine Luftfederbalg ein die Rückschlagarmatur ausbildendes, lufteintrittsseitig vorgesehenes, vorzugsweise federbelastetes, Rückschlagventil aufweist, um bei Unterschreiten eines vorgegebenen Einströmdrucks der Luft in den Luftfederbalg ein Austreten von Luft aus dem Luftfederbalg in die Luftzuleitung automatisch zu unterbinden. Hierdurch soll das Schadensrisiko im Falle eines Lecks in der Gaszuleitung der Federungselemente minimiert werden, indem in einem solchen Fall das Ausströmen von Gas aus dem Federungselement automatisch unterbunden wird und die Funktionsfähigkeit des Federungselementes zumindest über einen Zeitraum erhalten bleibt, innerhalb dessen die Siebmaschine kontrolliert zum Stillstand gebracht werden kann. Mit der Problematik des Vermeidens oder Verminderns eines unerwünschten Aufschwingens des ersten Maschinenteils beim An- und Ablaufen der Siebmaschine befasst sich dieses Dokument nicht.

Für die vorliegende Erfindung stellt sich daher die Aufgabe, eine Schwingmaschine mit einer Lagereinrichtung und ein Verfahren zum Betreiben einer Schwingmaschine anzugeben, womit mit einem wirtschaftlichen technischen Aufwand einerseits ein unerwünschtes Aufschwingen des ersten Maschinenteils beim An- und Ablaufen der Schwingmaschine vermieden oder wenigstens wesentlich vermindert wird und womit andererseits eine unerwünschte Schwingungsdämpfung des schwingenden, zweiten Maschinenteils während des laufenden Betriebes, d. h. zwischen dem Anlaufen und dem Ablaufen der Schwingmaschine, vermieden wird.

Die Lösung des ersten, die Lagereinrichtung betreffenden Teils der Aufgabe gelingt erfindungsgemäß mit einer Lagereinrichtung der eingangs genannten Art mit den Merkmalen des Anspruchs 1.

Der mit der Erfindung erzielte Vorteil besteht insbesondere darin, dass eine erhöhte Auslenkung des schwingenden, zweiten Maschinenteils bei dem An- und Ablaufen der Schwingmaschine und dem dabei zwangsläufig auftretenden Durchfahren der Eigenfrequenz der Lagereinrichtung durch die mittels des mit der Luftfeder strömungsverbundenen Druckluftbehälters und der zwischen die Luftfeder und den Druckluftbehälter geschalteten, in die Strömungsverbindung eingebauten Drossel bewirkten Dämpfung verhindert oder wenigstens merklich vermindert wird. Die erfindungsgemäße Lagereinrichtung ist vorteilhaft auch bei hohen Schwingweiten von beispielsweise 20 mm einsetzbar und weitestgehend verschleißfrei.

Mittels der Drossel wird eine frequenzabhängige, dynamische Steifigkeit und Dämpfung der Lagereinrichtung erreicht. Die dynamische Steifigkeit zeigt eine deutliche Zunahme mit steigender Frequenz, bis ein oberes Steifigkeitsniveau mit geringer Dämpfung erreicht ist. Das Verhalten entspricht hier dem einer einzelnen steifen Luftfeder. Das untere Steifigkeitsniveau mit großer Dämpfung resultiert aus dem mit dem Zusatzvolumen des Druckluftbehälters künstlich vergrößerten Volumen der Luftfeder. Zwischen dem oberen und unteren Steifigkeitsniveau liegt eine Übergangszone, in der sich die Lagereinrichtung zunehmend versteift. Demnach lässt sich daraus eine Übergangsfrequenz am Wendepunkt der Kurve bestimmen, die beschreibt, ab wann sich das Zusatzvolumen im Druckluftbehälter von der Luftfeder sukzessive abkoppelt. Die Abkopplung und Ankopplung erfolgt vorteilhaft automatisch durch physikalische Effekte, ohne dass eine aktive Steuerung der Drossel oder anderer Komponenten der Lagereinrichtung nötig wird. Das Abkoppeln ist nämlich allein schon dadurch bedingt, dass bei hohen Frequenzen und in ihrem Durchlassquerschnitt entsprechend dimensionierter Drossel der Luft nicht genügend Zeit gegeben wird, einen Druckausgleich zwischen Luftfeder und Zusatzvolumen im Druckluftbehälter herzustellen. Dementsprechend sinkt die Dämpfung nach Abkopplung im Betrieb der zugehörigen Schwingmaschine mit Nenndrehzahl auf ein zu vernachlässigendes Niveau und beeinflusst die Energieeffizienz der Siebmaschine nicht negativ. Bei geeignet gewählter Drossel liegt die Übergangsfrequenz nahe, konkret wenig oberhalb, der Resonanz- oder Eigenfrequenz des schwingenden ersten Maschinenteils der Schwingmaschine, womit für diesen Frequenzbereich das hier gewünschte Maximum an Dämpfung generiert wird.

Bei optimal gewählten Parametern der Lagereinrichtung, insbesondere des Drosselquerschnitts, werden, wie Simulationsrechnungen und praktische Versuche gezeigt haben, zweistellige Dämpfungsgrade nahe 20 % erreicht. Dadurch werden die Schwingungsamplituden des schwingenden Maschinenteils der zugehörigen Schwingmaschine beim Resonanzdurchlauf, d. h. die Schwingungsüberhöhungen beim An- und Ablaufen der Schwingmaschine, und somit die dynamischen Belastungen der Schwingmaschine, der Lagereinrichtung und auch der Umgebung deutlich reduziert. Schwingmaschinen, die auf üblichen, aus dem Stand der Technik bekannten Luftfedern oder auf hinsichtlich der Dämpfungseigenschaften gleichwertigen Stahlfedern gelagert sind, weisen dagegen eine Schwingungsüberhöhung von einem Vielfachen der stationären Schwingungsamplitude auf.

Die Eigen- oder Resonanzfrequenz der Lagereinrichtung der erfindungsgemäßen Schwingmaschine liegt, bedingt durch deren technisches Funktionsprinzip, vorteilhaft niedrig, in der Praxis vorzugsweise zwischen etwa 1 und 3 Hz. Folglich ist auch bei relativ langsam, d. h. mit niedriger Betriebsfrequenz von beispielsweise bis herab zu etwa 8 Hz, laufenden Schwingmaschinen ein ausreichender Abstand zwischen der Eigen- oder Resonanzfrequenz der Lagereinrichtung und der Betriebsfrequenz der Schwingmaschine und damit eine ausreichende Schwingungsisolation auch bei derart niedrigen Betriebsfrequenzen, wie z. B. lediglich 8 Hz, gegeben.

Die Lagereinrichtung der erfindungsgemäßen Schwingmaschine stellt also ein System einer Luftfeder-Dämpfer-Einheit dar, welches über physikalische, thermodynamische und strömungsdynamische Effekte eine Dämpfung durch eine Luftfeder mit einem Zusatzvolumen, verbunden über eine Drossel, in einem gewünschten Frequenzbereich bewirkt. Die Dämpfung entsteht durch Energiedissipation in Form von Wärme, was sich durch Messungen mit einer Wärmebildkamera an einer erfindungsgemäßen Lagereinrichtung belegen lässt.

In einer ersten Ausgestaltung der Schwingmaschine mit Lagereinrichtung ist vorgesehen, dass die Drossel eine nicht verstellbare Drossel ist. Diese Lagereinrichtung der Schwingmaschine zeichnet sich durch eine technisch besonders einfache und dadurch kostengünstige Ausführung aus, da eine unverstellbare Drossel keine beweglichen und verschleißenden Elemente enthält und keine zusätzlichen aktiven Elemente, wie Aktoren, benötigt. Dennoch werden auch schon mit dieser technisch einfachen Lagereinrichtung der Schwingmaschine die vorstehend erläuterten günstigen Eigenschaften und Vorteile erzielt.

In einer alternativen Weiterbildung der erfindungsgemäßen Schwingmaschine mit Lagereinrichtung ist vorgesehen, dass die Drossel verstellbar ist. Hiermit kann der Durchlassquerschnitt der Drossel so gewählt und ggf. variiert werden, dass die Dämpfung der Luftfeder oder Luftfedern während des gesamten An- und Ablaufvorganges der Schwingmaschine auf dem maximal erreichbaren Niveau liegt und dass die Dämpfung der Luftfeder oder Luftfedern während des Betriebes der zugehörigen Schwingmaschine mit ihrer Betriebsfrequenz, also zwischen An- und Ablaufvorgang, minimal ist. Mittels Verstellung des Drosselquerschnitts lässt sich maßgeblich die zuvor erläuterte Übergangsfrequenz beeinflussen. Dies ist besonders dienlich bei Lagereinrichtungen für Schwingmaschinen, wie Siebmaschinen, welche in verschiedenen Frequenzbereichen betrieben werden können. Ferner können hier die Übergangsfrequenz und das Dämpfungsmaximum mit steigender / sinkender Frequenz beim An-/ Ablaufen der Schwingmaschine stufenlos mit verschoben worden.

Weiterhin wird erfindungsgemäß vorgeschlagen, dass die Drossel abhängig von einer erfassten Schwingfrequenz des schwingenden ersten Maschinenteils zwischen einer drosselnden Stellung und einer nicht drosselnden Stellung umschaltbar ist. In dieser Ausführung der Schwingmaschine mit Lagereinrichtung nimmt die Drossel nur zwei verschiedene Stellungen ein, was eine technisch einfache und kostengünstige Lösung ist.

Alternativ kann die Drossel abhängig von einer erfassten Schwingfrequenz des schwingenden ersten Maschinenteils stufenlos oder in mehreren Stufen zwischen mehr oder weniger geöffneten, drosselnden und die Luftfeder dämpfenden Stellungen einerseits und einer nicht drosselnden Stellung andererseits verstellbar sein. Hiermit wird mit etwas höherem technischem Aufwand eine differenziertere und variablere Einstellung der Dämpfung der Luftfeder oder Luftfedern der Schwingmaschine ermöglicht.

Weiter sieht die Erfindung für die Schwingmaschine mit Lagereinrichtung vor, dass die nicht drosselnde Stellung der Drossel deren vollständig geschlossene Stellung ist, bei der die Drossel eine Strömungsverbindung zwischen der Luftfeder und dem Druckluftbehälter sperrt, oder dass die nicht drosselnde Stellung der Drossel deren vollständig geöffnete Stellung ist, bei der eine nicht gedrosselte, die Luftfeder nicht dämpfende Strömungsverbindung zwischen der Luftfeder und dem Druckluftbehälter besteht. Bei der hier zuerst genannten Alternative wird die Eigen- oder Resonanzfrequenz der Lagereinrichtung allein durch das Luftvolumen der Luftfeder bestimmt. Bei der hier an zweiter Stelle genannten Alternative wird durch das dem Luftvolumen der Luftfeder hinzugefügte zusätzliche Volumen des Druckluftbehälters die Eigen- oder Resonanzfrequenz der Lagereinrichtung auf eine niedrigere Frequenz abgesenkt, was insbesondere bei Lagereinrichtungen für Schwingmaschinen mit niedriger Betriebsfrequenz vorteilhaft ist. Mit der Größe des Zusatzvolumens kann maßgeblich die Eigen- oder Resonanzfrequenz der Lagereinrichtung beeinflusst werden, wie weiter unten noch ausführlicher beschrieben wird.

Die zuvor erwähnte, nicht gedrosselte Strömungsverbindung zwischen der Luftfeder und dem Druckluftbehälter kann statt über die Drossel auch parallel zu dieser über eine zusätzliche, z. B. mittels eines Ventils, zwischen Schließstellung und Öffnungsstellung umschaltbare, der Drossel parallelgeschaltete Umgehungsleitung ausreichend großen Querschnitts zwischen Luftfeder und Druckluftbehälter verlaufen.

In weiterer Konkretisierung ist für die Schwingmaschine mit Lagereinrichtung vorgesehen, dass die Drossel bei während eines Anlaufens und eines Ablaufens der Schwingmaschine auftretenden Schwingfrequenzen eine drosselnde, die Luftfeder dämpfende Stellung einnimmt und im Betrieb der Schwingmaschine bei deren Betriebsfrequenz eine nicht drosselnde vollständig geöffnete oder geschlossene, die Luftfeder jeweils nicht dämpfende Stellung einnimmt. Sowohl bei vollständig geöffneter als auch bei geschlossener Drossel gibt es keine von der Drossel bewirkte Dämpfung der Luftfeder, sondern nur deren vernachlässigbare Eigendämpfung, sodass im laufenden Betrieb der Schwingmaschine bei deren Betriebsfrequenz keine unerwünschte Dämpfung der Schwingung des schwingenden Maschinenteils der Schwingmaschine auftritt.

Damit im Betrieb der Schwingmaschine die Schwingung des ersten, schwingenden Maschinenteils ausreichend vom zweiten, nicht schwingenden Maschinenteil und von der Aufstellfläche der Schwingmaschine isoliert und entkoppelt wird, wird vorgeschlagen, dass die Lagereinrichtung der Schwingmaschine eine Resonanz- oder Eigenfrequenz hat, die maximal halb so groß ist wie eine Betriebsfrequenz des schwingenden ersten Maschinenteils der Schwingmaschine.

Eine weitere Möglichkeit der gezielten Beeinflussung des Federungsverhaltens der Lagereinrichtung der Schwingmaschine besteht darin, dass bevorzugt mit dem Druckluftbehälter und/oder mit der Luftfeder eine Druckluftquelle verbunden ist und dass mittels der Druckluftquelle in dem Druckluftbehälter und in der Luftfeder ein vorgebbarer, veränderbarer Grund-Luftdruck einstellbar ist.

Zwecks möglichst einfacher und kostengünstiger Konstruktion der Schwingmaschine weist diese vorzugsweise pro Lagerungspunkt jeweils eine Luftfeder auf.

Dabei weisen vorzugsweise die Luftfedern aller Lagerungspunkte der Schwingmaschine eine gleiche Ausrichtung, vorzugsweise eine vertikale Ausrichtung, auf. Hiermit können insbesondere die großen, durch die große Masse des schwingenden Maschinenteils auf die Lagereinrichtung ausgeübten statischen Lasten gut aufgenommen werden.

Bei besonders großer statischer und dynamischer Belastung der Lagereinrichtung der Schwingmaschine kann diese pro Lagerungspunkt jeweils zwei als Paar angeordnete Luftfedern aufweisen, auf welche die Belastungen verteilt werden. Grundsätzlich ist es natürlich auch möglich, pro Lagerungspunkt noch mehr als zwei Luftfedern vorzusehen, wenn dies erforderlich oder zweckmäßig ist.

Luftfedern haben in ihrer Querrichtung eine im Vergleich zur Federrate in Längsrichtung wesentlich niedrigere Federrate und damit in ihrer Querrichtung auch eine niedrigere Eigenfrequenz als in ihrer Längsrichtung. Weiterhin geht eine Beaufschlagung der Luftfeder in deren Querrichtung mit einer geringeren Volumenänderung der Luftfeder einher als eine Beaufschlagung in deren Längsrichtung. Werden z. B. alle Luftfedern der Schwingmaschine stehend, d. h. mit vertikaler Längsrichtung, angeordnet, dann ist nachteilig die Dämpfung einer Bewegung des schwingenden Maschinenteils der Schwingmaschine in horizontaler Richtung nicht so effizient wie in der vertikalen Richtung. Um diesen Nachteil zu vermeiden, ist erfindungsgemäß vorgesehen, dass die zwei Luftfedern jedes Paares unter einem Winkel von bis zu 90° gegeneinander angestellt sind. Durch die Anstellung der Luftfedern um bis zu 90° gegeneinander verursachen auch horizontale Bewegungen des schwingenden Maschinenteils der Schwingmaschine eine Belastung der Luftfeder oder Luftfedern in deren Längsrichtung und Schwingungen während des An- und Ablaufens der zugehörigen, auf der Lagereinrichtung gelagerten Schwingmaschine können damit effizienter und richtungsunabhängiger gedämpft und vermindert werden.

Um eine räumlich symmetrische Dämpfungswirkung der Lagereinrichtung der Schwingmaschine zu gewährleisten, sind zweckmäßig die zwei Luftfedern jedes Paares symmetrisch zueinander unter gleichen Winkeln von bis zu 45° zur Vertikalen ausgerichtet.

Eine vorteilhaft einfache Ausführung einer Schwingmaschine mit einer mehrere Luftfedern aufweisenden Lagereinrichtung mit relativ wenigen Einzelteilen wird erreicht, wenn allen Luftfedern ein gemeinsamer, einzelner Druckluftbehälter und eine gemeinsame, einzelne Drossel zugeordnet sind. Nachteilig kann hier auf der anderen Seite allerdings die Notwendigkeit längerer Luftleitungen zwischen den Luftfedern einerseits und der Drossel und dem Druckluftbehälter andererseits sein, wenn die Luftfedern relativ weit voneinander entfernt angeordnet sind.

In einer alternativen Ausgestaltung der Schwingmaschine mit einer mehrere Luftfedern aufweisenden Lagereinrichtung sind jeder Luftfeder ein eigener Druckluftbehälter und eine eigene Drossel zugeordnet. Hiermit wird insbesondere eine individuelle Beeinflussung der Federungs- und Dämpfungseigenschaften der einzelnen Luftfedern ermöglicht.

Für die oben erwähnte Ausführung der Schwingmaschine mit einer Lagereinrichtung mit paarweise angeordneten Luftfedern kann es zweckmäßig sein, jeweils den zwei Luftfedern jedes Paares je einen gemeinsamen Druckluftbehälter und eine gemeinsame Drossel zuzuordnen.

Ein Vorteil der Schwingmaschine mit einer Lagereinrichtungen mit zwei oder noch mehr Luftfedern pro Lagerungspunkt ist auch, dass bei einem Schaden einer Luftfeder mit Entweichen der Druckluft daraus immer noch wenigstens eine andere Luftfeder an dem betreffenden Lagerungspunkt einsatzfähig ist, wodurch weitere Schäden an der Lagereinrichtung und an der Schwingmaschine bis zu deren Notfall-Stillsetzung vermieden werden.

Die/jede verstellbare Drossel der Lagereinrichtung der Schwingmaschine kann unterschiedlich ausgeführt sein; bevorzugt ist die/jede verstellbare Drossel durch ein in seinem Durchlassquerschnitt verstellbares Drosselventil oder durch eine in ihrer durchströmten Länge verstellbare Drosselleitung, wie Schlauch mit engem Querschnitt, gebildet.

Weiter ist für die erfindungsgemäße Schwingmaschine mit Lagereinrichtung vorgesehen, dass der/jeder Druckluftbehälter ein veränderbares, einstellbares Volumen aufweist oder dass dem/jedem Druckluftbehälter ein oder mehrere mit diesem strömungsmäßig verbindbare und von diesem strömungsmäßig trennbare Zusatz-Druckluftbehälter zugeordnet sind. Mit der variablen Größe des durch das Volumen des Druckluftbehälters und ggf. der Zusatz-Druckluftbehälter zur Verfügung gestellten Zusatzvolumens zum Volumen der Luftfeder ist die Eigenfrequenz der Lagereinrichtung einstellbar und anpassbar. Demnach kann z. B. die Steifigkeit der Lagereinrichtung mittels Vergrößerung des Zusatzvolumens abgesenkt werden, was geringere dynamische Belastungen zur Folge hat.

In einer Weiterbildung der erfindungsgemäßen Schwingmaschine ist vorgesehen, dass ihr eine Steuereinheit zugeordnet ist, mit welcher eine aktuelle Schwingfrequenz des schwingenden ersten Maschinenteils erfassbar ist und mit welcher die/ jede Drossel abhängig von der erfassten Schwingfrequenz zwischen einer drosselnden Stellung während eines An- und Ablaufens der Schwingmaschine mit Schwingfrequenzen unterhalb der Betriebsfrequenz und einer offenen oder geschlossenen, jeweils nicht oder gering drosselnden Stellung während des laufenden Betriebes der Schwingmaschine mit deren Betriebsfrequenz verstellbar ist.

Zur Lösung des zweiten, das Verfahren zum Betreiben einer Schwingmaschine betreffenden Teils der Aufgabe schlägt die Erfindung ein Verfahren vor, welches dadurch gekennzeichnet ist, dass eine aktuelle Schwingfrequenz des schwingenden ersten Maschinenteils erfasst wird und dass die/jede Drossel abhängig von der erfassten Schwingfrequenz zwischen einer drosselnden, die/jede Luftfeder dämpfenden Stellung während eines An- und Ablaufens der Schwingmaschine mit Schwingfrequenzen unterhalb der Betriebsfrequenz und einer nicht drosselnden offenen oder einer geschlossenen, die Luftfeder jeweils nicht dämpfenden Stellung während des Betriebes der Schwingmaschine mit deren Betriebsfrequenz verstellt wird. Mit diesem Verfahren zum Betreiben einer Schwingmaschine werden sowohl ein unerwünschtes Aufschwingen des ersten, schwingenden Maschinenteils beim An- und Ablaufen der Schwingmaschine als auch eine unerwünschte Dämpfung der Schwingung des zweiten, schwingenden Maschinenteils während des Betriebes der Schwingmaschine mit Betriebsfrequenz verhindert oder wenigstens wesentlich vermindert. Dadurch werden schädliche dynamische Belastungen der Schwingmaschine reduziert und es wird eine wirtschaftlichere Betriebsweise der Schwingmaschine mit geringerem Antriebsenergieaufwand ermöglicht, da keine Energieverschwendung infolge unerwünschter Dämpfung beim laufenden Betrieb der Schwingmaschine mit Betriebsfrequenz auftritt.

Im Folgenden werden Ausführungsbeispiele der Erfindung anhand einer Zeichnung erläutert. Die Figuren der Zeichnung zeigen:
- Figur 1: eine Schwingmaschine mit einer ersten Lagereinrichtung, in schematischer Seitenansicht,
- Figur 2: die Schwingmaschine mit einer zweiten Lagereinrichtung, in schematischer Seitenansicht,
- Figur 3: die Schwingmaschine mit einer dritten Lagereinrichtung, in schematischer Seitenansicht,
- Figur 4: die Schwingmaschine mit einer vierten Lagereinrichtung, in schematischer Seitenansicht,
- Figur 5: die Schwingmaschine mit einer fünften Lagereinrichtung, in schematischer Seitenansicht,
- Figur 6: die Schwingmaschine mit einer sechsten Lagereinrichtung, in schematischer Seitenansicht,
- Figur 7: die Schwingmaschine mit einer siebten Lagereinrichtung, in schematischer Seitenansicht,
- Figur 8: die Schwingmaschine mit einer achten Lagereinrichtung, in schematischer Seitenansicht,
- Figur 9: ein sogenanntes Bode-Diagramm, in welchem die Schwingungsüberhöhungen einer auf einer herkömmlichen Lagereinrichtung gelagerten Schwingmaschine und einer erfindungsgemäßen Schwingmaschine mit Lagereinrichtung einander gegenübergestellt sind,
- Figur 10: zwei Schwingungsdiagramme, in welchen das Ausschwingverhalten einer auf einer herkömmlichen Lagereinrichtung gelagerten Schwingmaschine und einer erfindungsgemäßen Schwingmaschine mit Lagereinrichtung einander gegenübergestellt sind, und
- Figur 11: ein Diagramm mit zwei Messkurven, die das Auslaufen einer Schwingmaschine nach einem Abschalten, einmal einer erfindungsgemäßen Schwingmaschine mit Lagereinrichtung und einmal einer Schwingmaschine mit konventioneller Lagereinrichtung, zeigen.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

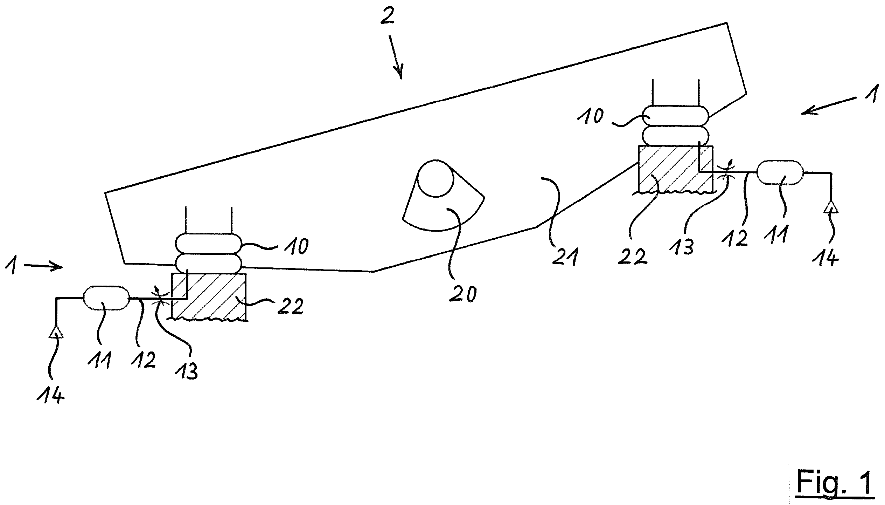

Figur 1 der Zeichnung zeigt eine Schwingmaschine 2, wie Siebmaschine oder Schwingförderer, mit einer ersten Lagereinrichtung 1, in schematischer Seitenansicht. Die Schwingmaschine 2 besitzt einen in deren Betrieb schwingenden ersten Maschinenteil 21, einen mit einer Aufstellfläche der Schwingmaschine 2 verbundenen zweiten Maschinenteil 22 und einen Schwingantrieb 20, beispielsweise mit einer durch einen Drehantrieb in Rotation versetzbaren Unwuchtmasse, wie in Figur 1 angedeutet und wie an sich bekannt. Hinter dem in Figur 1 sichtbaren Teil des ersten Maschinenteils 21 liegt verdeckt eine Sieb- oder Förderfläche, wie ebenfalls an sich bekannt ist.

Zwischen den Maschinenteilen 21, 22 ist eine federnde Lagereinrichtung 1 angeordnet, um das Schwingen des ersten Maschinenteils 21 relativ zum zweiten Maschinenteil 22 zu ermöglichen und um die Schwingungen des ersten Maschinenteils 21 vom zweiten Maschinenteil 22 und von der Aufstellfläche und der Umgebung zu entkoppeln.

Die Lagereinrichtung 1 weist pro Lagerungspunkt eine Luftfeder 10 auf. In der Figur 1 sind zwei vordere Lagerungspunkte mit je einer Luftfeder 10 sichtbar; zwei weitere, hintere Lagerungspunkte mit ebenfalls je einer Luftfeder 10 liegen verdeckt an der in Figur 1 hinteren Seite der Schwingmaschine 2. Der schwingende Maschinenteil 21 ist im gezeigten Ausführungsbeispiel also an vier Lagerungspunkten auf je einer Luftfeder 10, also auf insgesamt vier Luftfedern 10, gelagert, die, in Draufsicht gesehen, an den Ecken eines Rechteck angeordneten sind. Eine andere Zahl und Anordnung von Lagerungspunkten ist auch möglich.

Die Luftfedern 10 aller Lagerungspunkte weisen eine gleiche, hier vertikale, Ausrichtung auf.

Die Lagereinrichtung 1 weist weiterhin je Luftfeder 10 einen mit der Luftfeder 10 durch je eine Leitung 12 strömungsverbundenen Druckluftbehälter 11 auf. Zwischen die Luftfeder 10 und den zugehörigen Druckluftbehälter 11 ist in die Leitung 12 jeweils eine Drossel 13 geschaltet, die verstellbar ist, hier in ihrem Durchlassquerschnitt veränderbar ist. Dazu ist die Drossel 13 beispielsweise als verstellbares Drosselventil ausgeführt.

Mit jedem Druckluftbehälter 11 ist eine Druckluftquelle 14, wie z. B. ein Druckluftanschluss eines Druckluftnetzes oder ein Kompressor, verbunden. Mittels der Druckluftquelle 14 ist in dem zugehörigen Druckluftbehälter 11 und in der zugehörigen Luftfeder 10 jeweils ein vorgebbarer, veränderbarer Grund-Luftdruck einstellbar. Hiermit können die Federeigenschaften der Luftfedern, je nach Bedarf im konkreten Einsatzfall, passend eingestellt werden.

Jede Drossel 13 ist abhängig von einer erfassten Schwingfrequenz des schwingenden ersten Maschinenteils 21 zwischen einer drosselnden Stellung und einer nicht drosselnden Stellung umschaltbar, vorzugsweise stufenlos oder in mehreren Stufen zwischen mehr oder weniger geöffneten, drosselnden und die Luftfeder 10 dämpfenden Stellungen einerseits und einer nicht drosselnden Stellung andererseits verstellbar.

Die nicht drosselnde Stellung der Drossel 13 ist entweder deren vollständig geöffnete Stellung, bei der eine nicht gedrosselte, die Luftfeder 10 nicht dämpfende Strömungsverbindung zwischen der Luftfeder 10 und dem Druckluftbehälter 11 besteht, oder deren vollständig geschlossene Stellung, bei der die Drossel 13, oder alternativ ein zusätzliches Ventil, eine Strömungsverbindung zwischen der Luftfeder 10 und dem Druckluftbehälter 11 sperrt. Bei der ersten Alternative wird die Eigen- oder Resonanzfrequenz der Luftfedern 10 und damit der Lagereinrichtung 1 allein durch das Luftvolumen der Luftfedern 10 bestimmt. Bei der zweiten Alternative wird durch das dem Luftvolumen der Luftfeder 10 hinzugefügte zusätzliche Volumen des Druckluftbehälters 11 die Eigen- oder Resonanzfrequenz der Luftfedern 10 und damit der Lagereinrichtung 1 zu einer niedrigeren Frequenz verschoben.

Die Drosseln 13 nehmen bei während eines Anlaufens und eines Ablaufens der Schwingmaschine 2 auftretenden Schwingfrequenzen eine drosselnde, die Luftfeder 10 dämpfende Stellung ein, während sie im Betrieb der Schwingmaschine 2 bei deren Betriebsfrequenz eine entweder vollständig geöffnete oder geschlossene, die Luftfedern 10 jeweils nicht dämpfende Stellung einnehmen.

Um sicher zu vermeiden, dass es im Betrieb der Schwingmaschine 2 mit deren Betriebsfrequenz zu einer unerwünschten Anregung der Luftfedern 10 und der Lagereinrichtung 1 zu Schwingungen mit deren Eigen- oder Resonanzfrequenz kommt, hat die Lagereinrichtung 1 eine Eigenfrequenz, die maximal halb so groß ist wie die Betriebsfrequenz des schwingenden ersten Maschinenteils 21 der Schwingmaschine 2. Durch die Verwendung der Luftfedern 10 in der Lagereinrichtung 1 wird schon technisch-physikalisch bedingt eine vorteilhaft niedrige Eigenfrequenz der Lagereinrichtung 1 erreicht, die noch durch das Vergrößern des wirksamen Luftvolumens der Luftfedern 10 durch das Zuschalten des Luftvolumens der Druckluftbehälter 11 zum Eigen-Luftvolumen der Luftfedern 10 weiter erniedrigt werden kann.

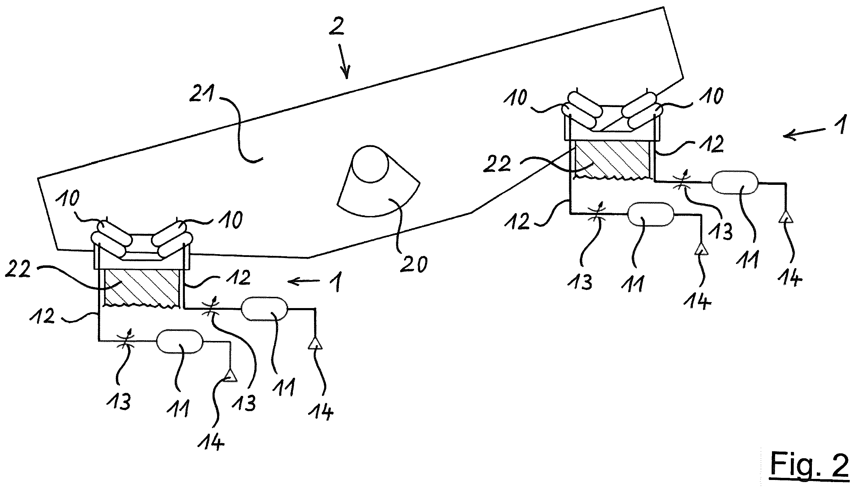

Figur 2 zeigt die Schwingmaschine 2 mit einer zweiten Lagereinrichtung 1, ebenfalls in schematischer Seitenansicht. Charakteristisch für die zweite Lagereinrichtung 1 ist, dass sie pro Lagerungspunkt jeweils zwei als Paar angeordnete Luftfedern 10 aufweist. Dabei sind die zwei Luftfedern 10 jedes Paares unter einem Winkel von bis zu 90°, im gezeigten Beispiel unter einem Winkel von 60°, gegeneinander angestellt. Die zwei Luftfedern 10 jedes Paares sind symmetrisch zueinander unter gleichen Winkeln von bis zu 45°, im gezeigten Beispiel unter einem Winkel von je 30°, zur Vertikalen ausgerichtet. Durch diese Anstellung der Luftfedern 10 verursachen auch horizontale Bewegungen des schwingenden Maschinenteils 21 der Schwingmaschine 2 eine Belastung der Luftfedern 10 in deren Längsrichtung. Schwingungen während des An- und Ablaufens der Schwingmaschine 2 können damit effizienter und richtungsunabhängiger gedämpft werden.

Die verstellbare Drossel 13 kann unterschiedlich ausgeführt sein. In den gezeigten Ausführungsbeispielen ist die/jede verstellbare Drossel 13 durch ein in seinem Durchlassquerschnitt verstellbares Drosselventil gebildet. Alternativ kann die/jede verstellbare Drossel 13 auch beispielsweise durch eine in ihrer durchströmten Länge verstellbare Drosselleitung, wie Schlauch mit engem Querschnitt, gebildet sein.

In beiden in den Figuren 1 und 2 der Zeichnung gezeigten Ausführungsbeispielen sind jeder Luftfeder 10 ein eigener Druckluftbehälter 11, eine eigene Drossel 13 und eine Druckluftquelle 14 zugeordnet.

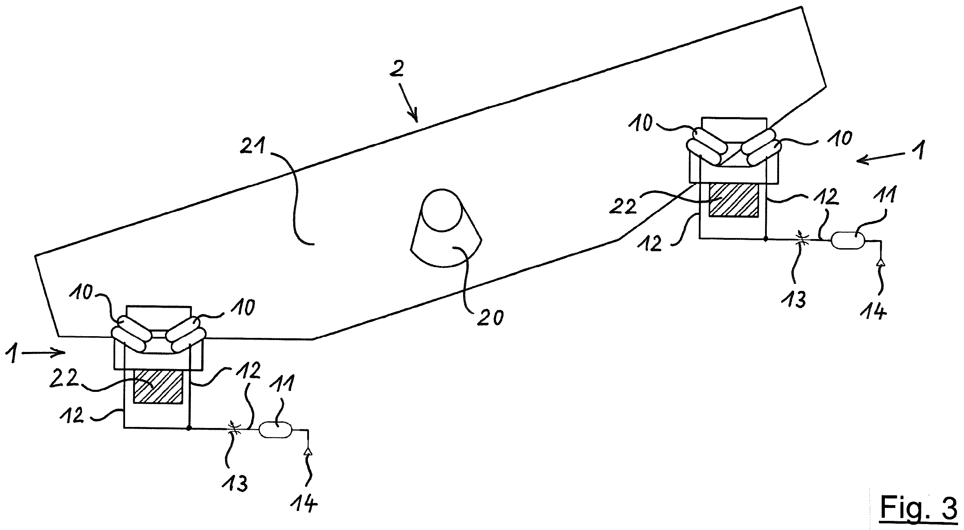

Gemäß dem Ausführungsbeispiel nach Figur 3 besteht auch die Möglichkeit, dass jeweils den zwei Luftfedern 10 jedes Paares der Lagereinrichtung 1 je ein gemeinsamer Druckluftbehälter 11 und eine gemeinsame verstellbare Drossel 13 zugeordnet sind. Die Druckluftleitung 12, welche den Druckluftbehälter 11 mit den zwei zugehörigen Luftfedern 10 verbindet und in welche die verstellbare Drossel 13 eingeschaltet ist, verzweigt sich in dieser Ausführung der Lagereinrichtung 1 jeweils zwischen der Drossel 13 und den zwei zugehörigen Luftfedern 10 in zwei Leitungszweige. Jeder Druckluftbehälter 11 ist mit einer Druckluftquelle 14 verbunden. Hinsichtlich der weiteren in Figur 3 dargestellten Teile und der Funktionsweise der Lagereinrichtung 1 wird auf die vorhergehende Beschreibung der Figuren 1 und 2 verwiesen.

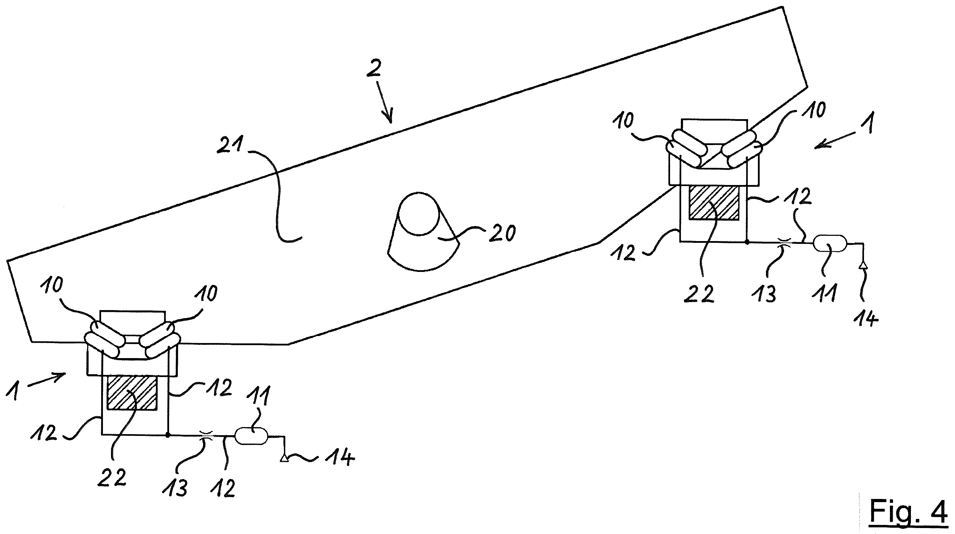

Alternativ zu den Ausführungsbeispielen nach den Figuren 1 bis 3 können gemäß dem Ausführungsbeispiel in Figur 4 die Drosseln 13 der Lagereinrichtung 1 auch nicht verstellbare Drosseln 13, also Drosseln 13 mit einem bestimmten festen Durchlassquerschnitt sein. Diese Lagereinrichtung 1 zeichnet sich durch eine technisch besonders einfache und dadurch kostengünstige Ausführung aus, da eine unverstellbare Drossel 13 keine beweglichen und verschleißenden Elemente enthält und keine zusätzlichen aktiven Elemente, wie Aktoren, benötigt.

Dennoch werden auch schon mit dieser technisch einfachen Lagereinrichtung 1 die vorstehend erläuterten günstigen Eigenschaften und Vorteile erzielt. Auch mittels der nicht verstellbaren Drossel 13 wird eine frequenzabhängige, dynamische Steifigkeit und Dämpfung der Lagereinrichtung 1 erreicht. Die Steifigkeit steigt mit steigender Frequenz, bis ein oberes Steifigkeitsniveau mit geringer Dämpfung erreicht ist. Das untere Steifigkeitsniveau mit einer großen Dämpfung resultiert aus dem mit dem Zusatzvolumen des Druckluftbehälters 11 künstlich vergrößerten Volumen der Luftfedern 10. Zwischen dem unteren und oberen Steifigkeitsniveau liegt eine Übergangszone, in der sich die Lagereinrichtung 1 zunehmend versteift. Dabei gibt es einen Übergangsfrequenzbereich, in welchem sich das Zusatzvolumen im Druckluftbehälter 11 von den Luftfedern 10 nach und nach abkoppelt. Die Abkopplung und Ankopplung erfolgt hier vorteilhaft automatisch allein durch physikalische Effekte, nämlich allein dadurch, dass bei hohen Frequenzen und in ihrem Durchlassquerschnitt entsprechend dimensionierter Drossel 13 der Luft nicht genügend Zeit bleibt, einen Druckausgleich zwischen Luftfedern 10 und Zusatzvolumen im Druckluftbehälter 11 herzustellen. Dementsprechend sinkt die Dämpfung nach Abkopplung im Betrieb der zugehörigen Schwingmaschine 2 mit Nenndrehzahl auf ein zu vernachlässigendes Niveau und beeinflusst die Energieeffizienz der Siebmaschine 2 nicht negativ. Bei geeignet gewählter Drossel liegt der Übergangsfrequenzbereich nahe, konkret wenig oberhalb, der Resonanz- oder Eigenfrequenz des schwingenden ersten Maschinenteils 21 der Schwingmaschine 2, womit für den Bereich der Resonanz- oder Eigenfrequenz, der beim An- und Ablaufen der Schwingmaschine 2 durchlaufen wird, das hier gewünschte Maximum an Dämpfung erzeugt wird.

Bei optimal gewählten Parametern der Lagereinrichtung 1, insbesondere des Querschnitts der Drossel 13, werden in der Praxis Dämpfungsgrade nahe 20 % erreicht. Dadurch werden die Schwingungsamplituden des schwingenden Maschinenteils 21 der zugehörigen Schwingmaschine 2 beim Resonanzdurchlauf, d. h. beim An- und Ablaufen der Schwingmaschine 2, und somit die dynamischen Belastungen der Schwingmaschine 2, der Lagereinrichtung 1 und auch der Umgebung deutlich reduziert. Ferner verringert sich die Ausschwingzeit der Schwingmaschine 2.

Hinsichtlich der weiteren in Figur 4 dargestellten Teile der Lagereinrichtung 1 wird auf die vorhergehende Beschreibung der Figuren 1 und 2 verwiesen.

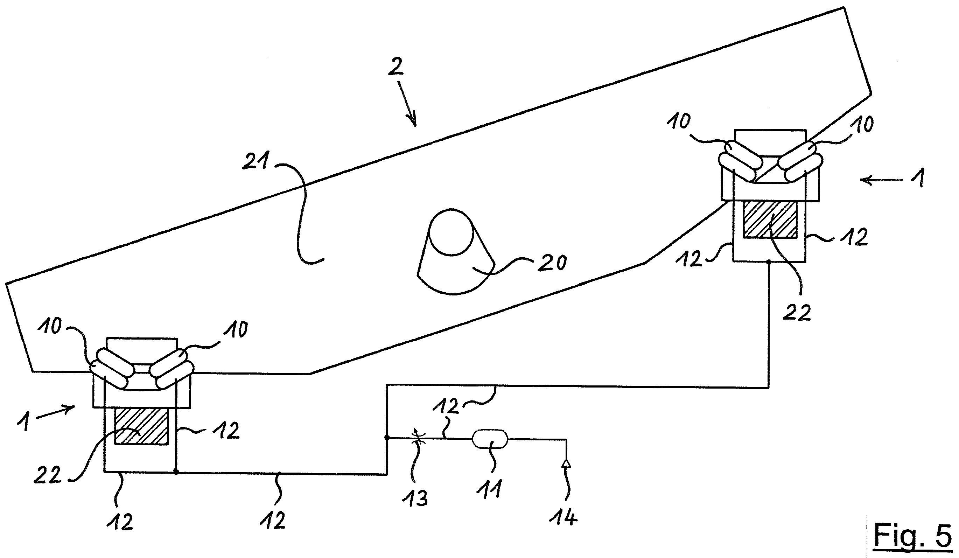

Gemäß dem Ausführungsbeispiel nach Figur 5 können auch allen Luftfedern 10 der Lagereinrichtung 1 der Schwingmaschine 2 ein gemeinsamer, einzelner Druckluftbehälter 11 und eine gemeinsame, einzelne, hier wieder verstellbare, Drossel 13 sowie eine einzige Druckluftquelle 14 zugeordnet sein. Die Druckluftleitung 12, welche den Druckluftbehälter 11 mit den Luftfedern 10 verbindet und in welche die verstellbare Drossel 13 eingeschaltet ist, verzweigt sich in dieser Ausführung der Lagereinrichtung 1 zwischen der Drossel 13 und den zugehörigen Luftfedern 10 in eine der Zahl der Luftfedern 10 entsprechende Zahl von Leitungszweigen. Hinsichtlich der weiteren in Figur 5 dargestellten Teile und der Funktionsweise der Lagereinrichtung 1 wird auf die vorhergehende Beschreibung der Figuren 1 und 2 verwiesen.

Die Auswahl der Ausführung der Lagereinrichtung richtet sich hierbei insbesondere danach, wie groß die im jeweiligen Einsatzfall der Lagereinrichtung 1 erforderlichen oder wünschenswerten Beeinflussungsmöglichkeiten sein sollen.

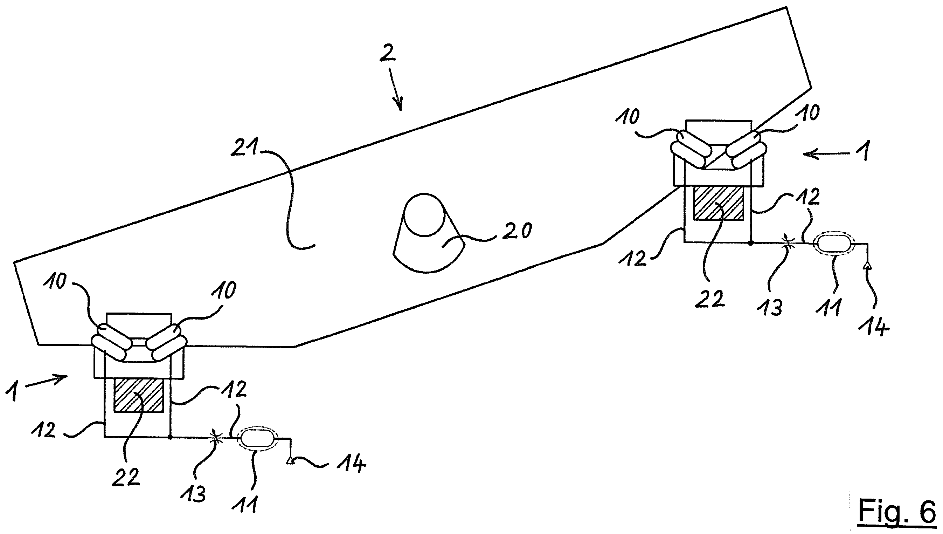

Figur 6 zeigt die Schwingmaschine 2 mit einer nochmals geänderten Lagereinrichtung 1, welche, abgesehen von der Ausführung der Druckluftbehälter 11, mit dem Ausführungsbeispiel nach Figur 3 übereinstimmt. Anders als bei den zuvor beschriebenen Ausführungsbeispielen haben die Druckluftbehälter 11 nicht ein festes Volumen, sondern ein veränderliches Volumen, wie in Figur 6 durch gestrichelte Linien an den Druckluftbehältern 11 angedeutet ist. Mit der variablen Größe des durch das Volumen des Druckluftbehälters 11 zur Verfügung gestellten Zusatzvolumens zum Volumen der Luftfedern 10 ist die Eigenfrequenz der Lagereinrichtung 1 einstellbar und anpassbar. Demnach kann z. B. die Steifigkeit der Lagereinrichtung 1 mittels Vergrößerung des Zusatzvolumens abgesenkt werden, was geringere dynamische Belastungen zur Folge hat.

Hinsichtlich der weiteren in Figur 6 dargestellten Teile und der Funktionsweise der Lagereinrichtung 1 wird auf die vorhergehende Beschreibung der Figuren 1 und 2 verwiesen.

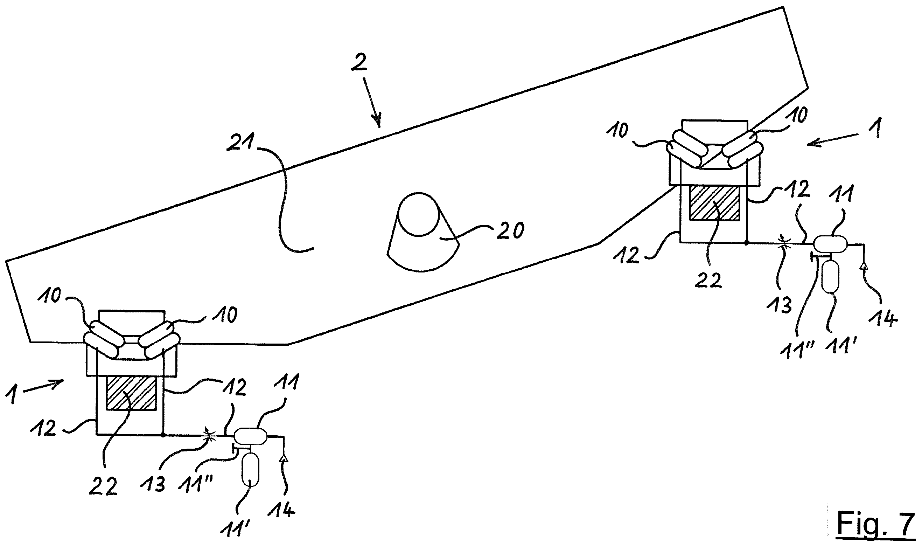

Figur 7 zeigt die Schwingmaschine 2 mit einer weiteren, zur Ausführung nach Figur 6 alternativen Lagereinrichtung 1. Hier hat jeder Druckluftbehälter 11 ein festes Volumen und jedem Druckluftbehälter 11 ist ein mit diesem strömungsmäßig verbindbarer und von diesem strömungsmäßig trennbarer Zusatz-Druckluftbehälter 11' zugeordnet. Zum wahlweisen Verbinden und Trennen von Druckluftbehälter 11 und Zusatz-Druckluftbehälter 11' dient jeweils ein Absperrventil 11", welches in eine den Druckluftbehälter 11 und den zugehörigen Zusatz-Druckluftbehälter 11' verbindende Luftleitung eingeschaltet ist. Auch mit der so erzielten variablen Größe des durch das Volumen des Druckluftbehälters 11 und des Zusatz-Druckluftbehälters 11' zur Verfügung gestellten Zusatzvolumens zum Volumen der Luftfedern 10 ist die Eigenfrequenz der Lagereinrichtung 1 einstellbar und anpassbar. Hinsichtlich der weiteren in Figur 7 dargestellten Teile der Lagereinrichtung 1 wird auf die vorhergehende Beschreibung der Figuren 1 und 2 verwiesen.

Das Zusatzvolumen wird bei den Lagereinrichtungen 1 nach den Figuren 6 und 7 zweckmäßig in Abhängigkeit von an der Schwingmaschine 2 ermittelten Parametern, insbesondere der Schwingfrequenz des schwingenden Maschinenteils 21, vorzugsweise automatisch, eingestellt bzw. zu- und abgeschaltet.

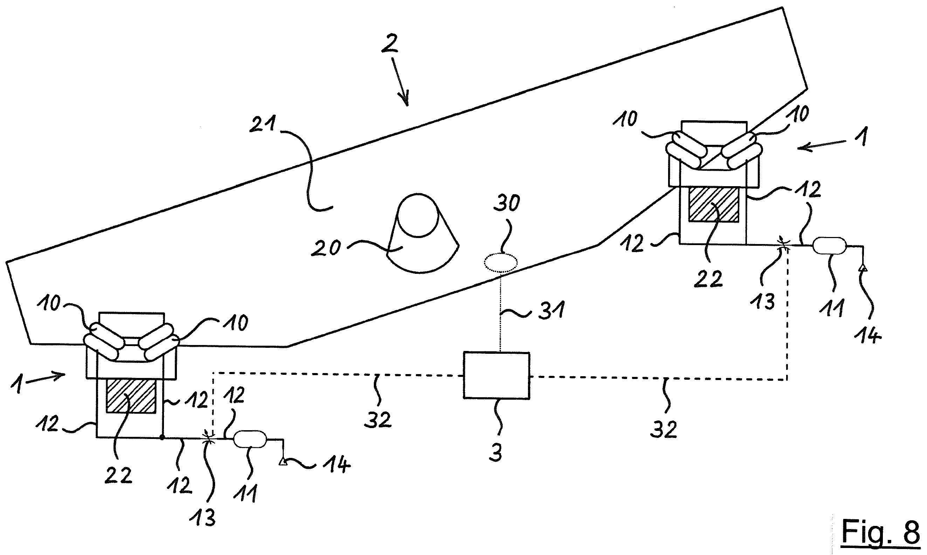

Figur 8 zeigt die Schwingmaschine 2 mit einer Lagereinrichtung 1 und mit einer zugeordneten Steuereinheit 3, mit welcher eine aktuelle Schwingfrequenz des schwingenden ersten Maschinenteils 21, z. B. mittels eines Schwingungsaufnehmers 30 am ersten Maschinenteil 21, erfassbar ist und mit welcher jede verstellbare Drossel 13 abhängig von der erfassten Schwingfrequenz zwischen einer drosselnden Stellung während eines An- und Ablaufens der Schwingmaschine 2 mit Schwingfrequenzen unterhalb der Betriebsfrequenz und einer offenen oder geschlossenen, jeweils nicht oder gering drosselnden Stellung während des laufenden Betriebes der Schwingmaschine 2 mit deren Betriebsfrequenz, die größer als die Schwingfrequenzen während des An- und Ablaufens der Schwingmaschine 2 sind, verstellbar ist. Dazu sind die verstellbaren Drosseln 13 zweckmäßig, z. B. elektromotorisch oder elektromagnetisch oder auf andere geeignete Art, von der Steuereinheit 3 aus automatisch fernbetätigbar. Zur Übertragung von Schwingfrequenzmessdaten vom Schwingungsaufnehmer 30 zur Steuereinheit 3 dient eine Messleitung 31. Die Übertragung von Stellbefehlen von der Steuereinheit 3 zu den verstellbaren Drosseln erfolgt jeweils über eine Steuerleitung 32. Alternativ ist hierbei auch eine drahtlose Übertragung möglich.

Zusätzlich können über die Steuereinheit 3 und mittels geeigneter weiterer, in Figur 8 nicht eigens dargestellter Sensoren auch weitere Schwingmaschinenparameter erfasst und für die Steuerung verwendet werden, wie z. B. die Schwingungsamplitude des schwingenden Maschinenteils 21 oder der Luftdruck in den Luftfedern 10.

Das Betreiben der Schwingmaschine 2 mit der Lagereinrichtung 1 erfolgt dann zweckmäßig so, dass eine aktuelle Schwingfrequenz des schwingenden ersten Maschinenteils 21 erfasst wird und dass die/jede Drossel 13 abhängig von der erfassten Schwingfrequenz zwischen einer drosselnden, die Luftfedern 10 dämpfenden Stellung während eines An- und Ablaufens der Schwingmaschine 2 mit Schwingfrequenzen unterhalb der Betriebsfrequenz und einer nicht drosselnden offenen oder einer geschlossenen, die/jede Luftfeder 10 jeweils nicht dämpfenden Stellung während des laufenden Betriebes der Schwingmaschine 2 mit deren Betriebsfrequenz verstellt wird.

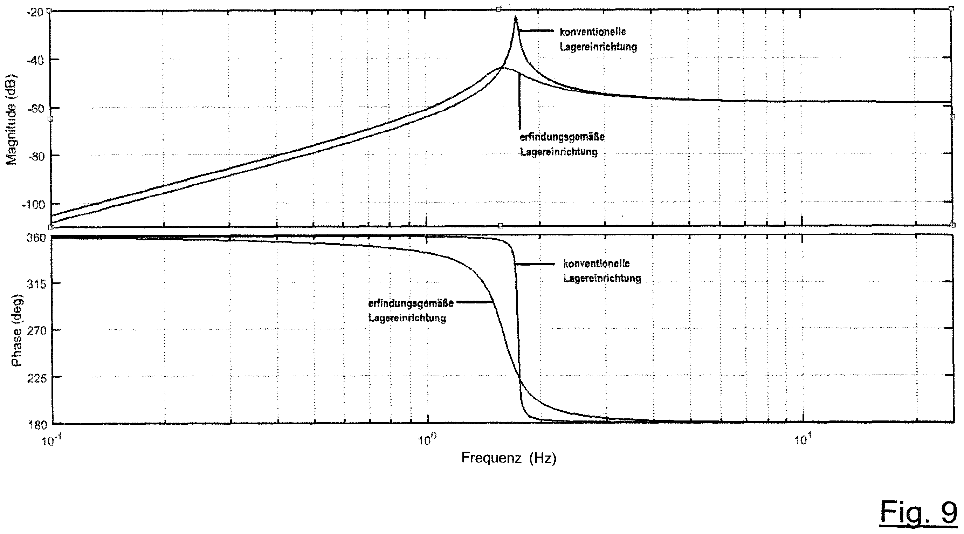

Figur 9 zeigt ein sogenanntes Bode-Diagramm, in welchem die Schwingungsüberhöhungen einer auf einer herkömmlichen Lagereinrichtung gelagerten Schwingmaschine und einer erfindungsgemäßen Schwingmaschine mit Lagereinrichtung einander gegenübergestellt sind.

Im Bode-Diagramm sind die Amplitude und die Phase gegenüber der Frequenz dargestellt. Diese werden folglich auch Amplitudenfrequenzgang und Phasenfrequenzgang genannt. Das Bode-Diagramm beschreibt damit den Zusammenhang zwischen einer harmonischen Anregung am Eingang und dem zugehörigen Ausgangssignal. Die Darstellung dieser Amplitudenverstärkung erfolgt, wie üblich, als logarithmische Größe in Dezibel [dB] und ist definiert zu 20*log (Ausgang/Eingang) dB. Zur Einordnung sei erwähnt, dass 6 dB Überhöhung einer 2-fachen Verstärkung, 12 dB einer 4-fachen und 20 dB einer 10-fachen Verstärkung entsprechen.

Bei Schwingmaschinen, die auf Lagereinrichtungen mit herkömmlichen, aus dem Stand der Technik bekannten Luftfedern oder Stahlfedern gelagert sind, lassen sich im Bode-Diagramm theoretische Schwingungsüberhöhungen von etwa 36 dB gegenüber nur etwa 9 dB bei der erfindungsgemäßen Schwingmaschine mit Lagereinrichtung bestimmen. Die dB-Werte der Schwingungsüberhöhungen entsprechen dabei den Differenzen zwischen der Magnitude im höheren Frequenzbereich bei 10 Hz und mehr und der Magnitude im Resonanz- oder Eigenfrequenzbereich, hier bei etwas unter 2 Hz.

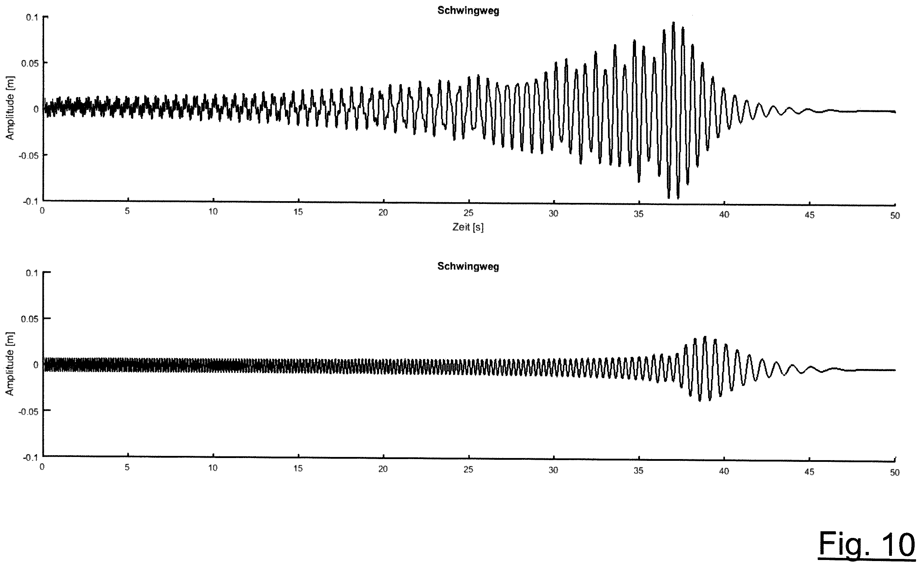

Ebenfalls ist die deutliche Dämpfung auch in Messungen der Schwingungsamplitude bei Resonanzdurchlauf belegbar. Hier lässt sich eine lediglich 3-fach überhöhte Schwingungsamplitude bei der erfindungsgemäßen Schwingmaschine mit Lagereinrichtung gegenüber einer 7- bis 10-fachen Überhöhung bei Maschinen auf herkömmlichen Luftfedern oder Stahlfedern belegen. Hierzu zeigt die Figur 10 zwei schematische Schwingungsdiagramme, in welchen das Ausschwingverhalten einer auf einer herkömmlichen Lagereinrichtung gelagerten Schwingmaschine oben in Figur 10 und einer erfindungsgemäßen Schwingmaschine mit Lagereinrichtung unten in Figur 10 einander gegenübergestellt sind.

Wie der Vergleich der Schwingungsdiagramme veranschaulicht, verringert sich die Ausschwingzeit der erfindungsgemäßen Schwingmaschine mit Lagereinrichtung aufgrund ihres hohen Dämpfungsgrades von annähernd 20 % wesentlich gegenüber einer auf einer aus dem Stand der Technik bekannten, herkömmlichen Lagereinrichtung gelagerten Schwingmaschine. Die oben eingangs beschriebenen Lagereinrichtungen mit Luftfedern nach dem Stand der Technik haben gegenüber der erfindungsgemäßen Lagereinrichtung wesentlich größere Ausschwingzeiten und wesentlich kleinere Dämpfungsgrade von nur 5 % oder noch weniger. Demnach wird auch die Schwingungsisolation mit der erfindungsgemäßen Schwingmaschine mit Lagereinrichtung in Form eines Systems einer Luftfeder-Dämpfer-Einheit messbar verbessert.

Die Kurven in den Figuren 9 und 10 entstammen einer Simulation, wurden jedoch durch zahlreiche Messungen auf dem Prüffeld verifiziert.

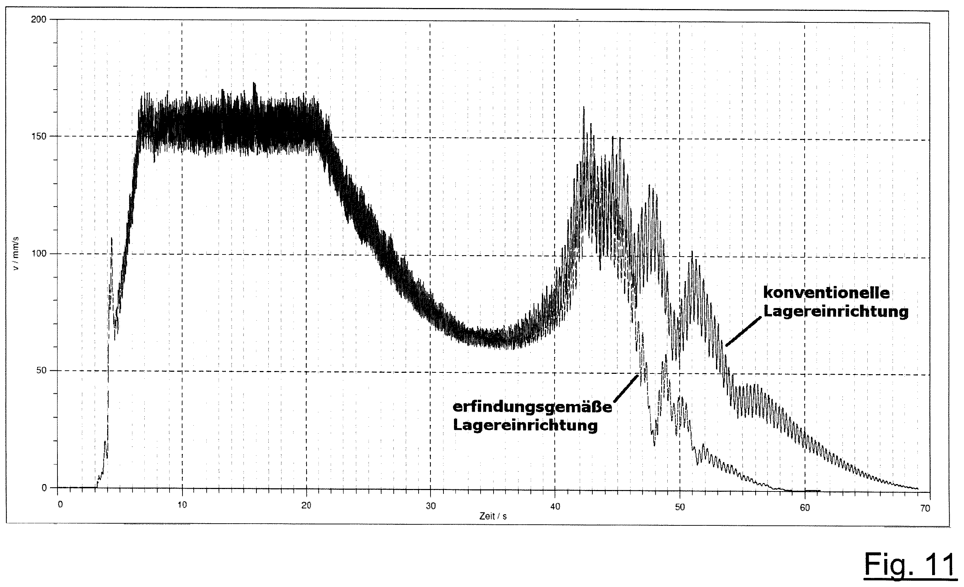

Figur 11 schließlich zeigt ein Diagramm mit zwei Messkurven, die das Auslaufen einer Schwingmaschine nach einem Abschalten, einmal einer erfindungsgemäßen Schwingmaschine mit Lagereinrichtung und einmal einer Schwingmaschine mit einer konventionellen Lagereinrichtung, zeigen. Hier ist ein Abschalten der Schwingmaschine bei ca. 22 Sekunden mit anschließendem Auslaufen zu sehen. Ab ca. 35 - 40 Sekunden sind erste Überhöhungen aufgrund von Resonanz zu erkennen. Nach Resonanzdurchlauf ist eine deutlich geringere und deutlich schneller abklingende Schwingung der erfindungsgemäßen Schwingmaschine mit Lagereinrichtung gegenüber der auf einer konventionellen Lagereinrichtung, hier eine herkömmliche Luftfeder, gelagerten Schwingmaschine zu erkennen.

Mit der erfindungsgemäßen Schwingmaschine 2 mit Lagereinrichtung 1 wird beim An- und Ablaufen der Schwingmaschine 2 mittels starker Dämpfung ein unerwünschtes Aufschwingen des schwingenden Maschinenteils 21 wirksam vermieden oder wenigstens auf ein unschädliches Maß begrenzt und es wird im laufenden Betrieb der Schwingmaschine 2 mit deren Betriebsfrequenz praktisch keine oder nur eine nicht störende geringe Dämpfung der Schwingung des schwingenden Maschinenteils 21 durch die Lagereinrichtung 1 erzeugt. Die erfindungsgemäße Schwingmaschine 2 mit Lagereinrichtung 1 ist also in der Lage, zwei auf den ersten Blick widersprüchlich erscheinende technische Anforderungen zu erfüllen.

**Bezugszeichenliste:**

| Zeichen | Bezeichnung |
|---|---|
| 1 | Lagereinrichtung |
| 10 | Luftfeder |
| 11 | Druckluftbehälter |
| 11' | Zusatz-Druckluftbehälter |
| 11" | Absperrventil |
| 12 | Leitung zwischen 10 und 11 |
| 13 | Drossel in 12 |
| 14 | Druckluftquelle |
| | |
| 2 | Schwingmaschine |
| 20 | Schwingantrieb |
| 21 | erster Maschinenteil |
| 22 | zweiter Maschinenteil |
| | |
| 3 | Steuereinheit |
| 30 | Schwingungsaufnehmer |
| 31 | Messleitung zwischen 30 und 3 |
| 32 | Steuerleitungen zwischen 3 und 13 |

## Patentansprüche

1. Schwingmaschine (2) mit einem in deren Betrieb schwingenden ersten Maschinenteil (21), mit einem mit einer Aufstellfläche der Schwingmaschine (2) verbundenen zweiten Maschinenteil (22) und mit einem Schwingantrieb (20), wobei zwischen den Maschinenteilen (21, 22) eine federnde Lagereinrichtung (1) angeordnet ist, die pro Lagerungspunkt wenigstens eine Luftfeder (10) und mindestens einen mit der Luftfeder (10) strömungsverbundenen Druckluftbehälter (11) aufweist und wobei zwischen die Luftfeder (10) und den Druckluftbehälter (11) eine Drossel (13) geschaltet ist,
**dadurch gekennzeichnet,**
**dass** die Lagereinrichtung (1) mit dem schwingenden ersten Maschinenteil (21) eine Resonanz- oder Eigenfrequenz (f_{R}) aufweist, die kleiner ist als eine Betriebsfrequenz (f_{B}) der Schwingmaschine (2), dass die Lagereinrichtung (1) frequenzabhängig ein unteres Steifigkeitsniveau mit großer Dämpfung bei niedrigen Frequenzen, ein oberes Steifigkeitsniveau mit geringer Dämpfung bei höheren Frequenzen und eine dazwischen liegende Übergangszone bei einer Übergangsfrequenz (f_{Ü}) aufweist und dass die/jede Drossel (13) so dimensioniert ist, dass die Übergangsfrequenz (f_{Ü}) nahe, konkret wenig oberhalb, der Resonanz- oder Eigenfrequenz (f_{R}) liegt, wobei die Lagereinrichtung (1) eine Resonanz- oder Eigenfrequenz (f_{R}) hat, die maximal halb so groß ist wie die Betriebsfrequenz (f_{B}) des schwingenden ersten Maschinenteils (21) der Schwingmaschine (2).

2. Schwingmaschine (2) nach Anspruch 1, **dadurch gekennzeichnet, dass** die Drossel (13) eine nicht verstellbare Drossel ist.

3. Schwingmaschine (2) nach Anspruch 1, **dadurch gekennzeichnet, dass** die Drossel (13) verstellbar ist.

4. Schwingmaschine (2) nach Anspruch 3, **dadurch gekennzeichnet, dass** die Drossel (13) abhängig von einer erfassten Schwingfrequenz des schwingenden ersten Maschinenteils (21) zwischen einer drosselnden Stellung und einer nicht drosselnden Stellung umschaltbar ist.

5. Schwingmaschine (2) nach Anspruch 3, **dadurch gekennzeichnet, dass** die Drossel (13) abhängig von einer erfassten Schwingfrequenz des schwingenden ersten Maschinenteils (21) stufenlos oder in mehreren Stufen zwischen mehr oder weniger geöffneten, drosselnden und die Luftfeder (10) dämpfenden Stellungen einerseits und einer nicht drosselnden Stellung andererseits verstellbar ist.

6. Schwingmaschine (2) nach Anspruch 4 oder 5, **dadurch gekennzeichnet, dass** die nicht drosselnde Stellung der Drossel (13) deren vollständig geöffnete Stellung ist, bei der eine nicht gedrosselte, die Luftfeder (10) nicht dämpfende Strömungsverbindung zwischen der Luftfeder (10) und dem Druckluftbehälter (11) besteht, oder dass die nicht drosselnde Stellung der Drossel (13) deren vollständig geschlossene Stellung ist, bei der die Drossel (13) eine Strömungsverbindung zwischen der Luftfeder (10) und dem Druckluftbehälter (11) sperrt.

7. Schwingmaschine (2) nach einem der Ansprüche 4 bis 6, **dadurch gekennzeichnet, dass** die Drossel (13) bei während eines Anlaufens und eines Ablaufens der Schwingmaschine (2) auftretenden Schwingfrequenzen eine drosselnde, die Luftfeder (10) dämpfende Stellung einnimmt und im Betrieb der Schwingmaschine (2) bei deren Betriebsfrequenz (f_{B}) eine entweder voll ständig geöffnete oder geschlossene, die Luftfeder (10) jeweils nicht dämpfende Stellung einnimmt.

8. Schwingmaschine (2) nach einem der Ansprüche 1 bis 7, **dadurch gekennzeichnet, dass** mit dem Druckluftbehälter (11) und/oder mit der Luftfeder (10) eine Druckluftquelle (14) verbunden ist und dass mittels der Druckluftquelle (14) in dem Druckluftbehälter (11) und in der Luftfeder (10) ein vorgebbarer, veränderbarer Grund-Luftdruck einstellbar ist.

9. Schwingmaschine (2) nach einem der Ansprüche 1 bis 8, **dadurch gekennzeichnet, dass** sie pro Lagerungspunkt jeweils eine Luftfeder (10) aufweist.

10. Schwingmaschine (2) nach Anspruch 9, **dadurch gekennzeichnet, dass** die Luftfedern (10) aller Lagerungspunkte eine gleiche Ausrichtung, vorzugsweise eine vertikale Ausrichtung, aufweisen.

11. Schwingmaschine (2) nach einem der Ansprüche 1 bis 8, **dadurch gekennzeichnet, dass** sie pro Lagerungspunkt jeweils zwei als Paar angeordnete Luftfedern (10) aufweist.

12. Schwingmaschine (2) nach Anspruch 11, **dadurch gekennzeichnet, dass** die zwei Luftfedern (10) jedes Paares unter einem Winkel von bis zu 90° gegeneinander angestellt sind.

13. Schwingmaschine (2) nach Anspruch 12, **dadurch gekennzeichnet, dass** die zwei Luftfedern (10) jedes Paares symmetrisch zueinander unter gleichen Winkeln von bis zu 45° zur Vertikalen ausgerichtet sind.

14. Schwingmaschine (2) nach einem der Ansprüche 1 bis 13, **dadurch**
**gekennzeichnet, dass** allen Luftfedern (10) ein gemeinsamer, einzelner Druckluftbehälter (11) und eine gemeinsame, einzelne Drossel (13) zugeordnet sind.

15. Schwingmaschine (2) nach einem der Ansprüche 1 bis 13, **dadurch**
**gekennzeichnet, dass** jeder Luftfeder (10) ein eigener Druckluftbehälter (11) und eine eigene Drossel (13) zugeordnet sind.

16. Schwingmaschine (2) nach einem der Ansprüche 11 bis 13, **dadurch**
**gekennzeichnet, dass** jeweils den zwei Luftfedern (10) jedes Paares je ein gemeinsamer Druckluftbehälter (11) und eine gemeinsame Drossel (13) zugeordnet sind.

17. Schwingmaschine (2) nach einem der Ansprüche 3 bis 16, **dadurch**
**gekennzeichnet, dass** die/jede verstellbare Drossel (13) durch ein in seinem Durchlassquerschnitt verstellbares Drosselventil oder durch eine in ihrer durchströmten Länge verstellbare Drosselleitung gebildet ist.

18. Schwingmaschine (2) nach einem der Ansprüche 1 bis 17, **dadurch**
**gekennzeichnet, dass** der/jeder Druckluftbehälter (11) ein veränderbares, einstellbares Volumen aufweist oder dass dem/jedem Druckluftbehälter (11) ein oder mehrere mit diesem strömungsmäßig verbindbare und von diesem strömungsmäßig trennbare Zusatz-Druckluftbehälter (11') zugeordnet sind.

19. Schwingmaschine (2) nach einem der Ansprüche 1, 3 bis 18, soweit nicht von Anspruch 2 abhängig, **dadurch gekennzeichnet, dass** ihr eine Steuereinheit (3) zugeordnet ist, mit welcher eine aktuelle Schwingfrequenz des schwingenden ersten Maschinenteils (21) erfassbar ist und mit welcher automatisch die/jede Drossel (13) abhängig von der erfassten Schwingfrequenz zwischen einer drosselnden Stellung während eines An- und Ablaufens der Schwingmaschine (2) mit Schwingfrequenzen unterhalb der Betriebsfrequenz (f_{B}) und einer offenen oder geschlossenen, jeweils nicht oder gering drosselnden Stellung während des Betriebes der Schwingmaschine (2) mit deren Betriebsfrequenz (f_{B}) verstellbar ist.

20. Verfahren zum Betreiben einer Schwingmaschine (2), welche die Merkmale eines oder mehrerer der Ansprüche 1, 3 bis 19, soweit nicht von Anspruch 2 abhängig, aufweist,
**dadurch gekennzeichnet,**
**dass** eine aktuelle Schwingfrequenz des schwingenden ersten Maschinenteils (21) erfasst wird und dass die/jede Drossel (13) abhängig von der erfassten Schwingfrequenz zwischen einer drosselnden, die/jede Luftfeder (10) dämpfenden Stellung während eines An- und Ablaufens der Schwingmaschine (2) mit Schwingfrequenzen unterhalb der Betriebsfrequenz (f_{B}) und einer nicht drosselnden offenen oder einer geschlossenen, die Luftfeder (10) jeweils nicht dämpfenden Stellung während des Betriebes der Schwingmaschine (2) mit deren Betriebsfrequenz (f_{B}) verstellt wird.

## Claims

1. Vibrating machine (2) comprising a first machine part (21) that vibrates in operation; a second machine part (22) connected to an installation area of the vibrating machine (2); and a vibratory drive (20), wherein a resilient bearing system (1) is arranged between the machine parts (21, 22) and has one or more air springs (10) per support point and one or more compressed air reservoirs (11) fluidically connected to the air spring (10), and wherein a throttle (13) is switched in between the air spring (10) and the compressed air reservoir(11),
**characterized in that**
the bearing system (1) with the first vibratory machine part (21) has a resonant or natural frequency (f_{R}) lower than an operating frequency (f_{B}) of the vibrating machine (2); that the bearing system (1) has a frequency-dependent lower stiffness level with high damping at low frequencies, an upper stiffness level with low damping at higher frequencies, and a transition zone lying in between at a transitional frequency (f_{Ü}); and that the/each throttle (13) is dimensioned in such a way that the transitional frequency (f_{Ü}) is close to, preferably slightly above the resonant or natural frequency (f_{R}),. wherein the bearing system (1) has a resonant or natural frequency (f_{R}) amounting to a maximum of one-half the size of an operating frequency (f_{B}) of the first vibratory machine part (21) of the vibrating machine (2).

2. The vibrating machine (2) according to Claim 1, **characterized in that** the throttle (13) is not adjustable.

3. The vibrating machine (2) according to Claim 1, **characterized in that** the throttle (13) is adjustable.

4. The vibrating machine (2) according to Claim 3, **characterized in that** the throttle (13) is switchable between a restricting position and a non-restricting position as a function of a detected vibration frequency of the first vibratory machine part (21).

5. The vibrating machine (2) according to Claim 3, **characterized in that** the throttle (13) is variable either infinitely or in several steps from more or less open, restricting positions with the air springs (10) being damped, to a non-restricting position as a function of a detected vibrating frequency of the vibrating first machine part (21).

6. The vibrating machine (2) according to Claim 4 or 5, **characterized in that** the non-restricting position of the throttle (13) is its completely open position with an unrestricted fluidic connection between the air spring (10) and the compressed air reservoir (11) and with no damping of the air spring (10), or that the non-restricting position of the throttle (13) is its completely closed position with the throttle (13) blocking a fluidic connection between the air spring (10) and the compressed air reservoir (11).

7. The vibrating machine (2) according to one of Claims 4 to 6, **characterized in that** in the case of vibration frequencies occurring during startup and rundown of the vibrating machine (2), the throttle (13) assumes a restricting position damping the air spring (10), and in operation of the vibrating machine (2) at its operating frequency (f_{B}) it assumes either a completely open or closed position not damping the air spring (10) in either case.

8. The vibrating machine (2) according to one of Claims 1 to 7, **characterized in that** a compressed air source (14) is connected to the compressed air reservoir (11) and/or to the air spring (10) and that a specifiable, variable basic air pressure is set in the compressed air reservoir (11) and in the air spring (10) by means of the compressed air source (14).

9. The vibrating machine (2) according to one of Claims 1 to 8, **characterized in that** the vibrating machine (2) has one air spring (10) per support point.

10. The vibrating machine (2) according to Claim 9, **characterized in that** the air springs (10) of all support points are uniformly aligned, preferably vertically.

11. The vibrating machine (2) according to one of Claims 1 to 8, **characterized in that** the vibrating machine (2) has two air springs (10) per support point arranged as a pair.

12. The vibrating machine (2) according to Claim 11, **characterized in that** the two air springs (10) of each pair are placed against one another at an angle of up to 90°.

13. The vibrating machine (2) according to Claim 12, **characterized in that** the two air springs (10) of each pair are aligned symmetrically to one another at uniform angles of up to 45° to the vertical.

14. The vibrating machine (2) according to one of Claims 1 to 13, **characterized in that** all air springs (10) are associated with one single common compressed air reservoir (11) and one single common throttle (13).

15. The vibrating machine (2) according to one of Claims 1 to 13, **characterized in that** each air spring (10) is associated with its own compressed air reservoir (11) and its own throttle (13).

16. The vibrating machine (2) according to one of Claims 11 to 13, **characterized in that** the two air springs (10) of each pair are associated with one common compressed air reservoir (11) and one single common throttle (13) per pair.

17. The vibrating machine (2) according to one of Claims 3 to 16, **characterized in that** the/each adjustable throttle (13) is formed by a throttle valve with an adjustable throughput cross-section or by a throttle line with an adjustable flow-through length.

18. The vibrating machine (2) according to one of Claims 1 to 17, **characterized in that** the/each compressed air reservoir (11) has a variable, settable volume or that one or more additional compressed air reservoirs (11') fluidically connectable to and separable from the/each compressed air reservoir (11) is or are associated with the/each compressed air container (11).

19. The vibrating machine (2) according to one of Claims 1, 3 to 18, **characterized in that** a control unit (3) is associated with the vibrating machine (2), whereby a current vibration frequency of the first vibratory machine part (21) is detectable and whereby the/each throttle (13) is automatically adjustable, as a function of the detected vibration frequency, between a restricting position during a startup and rundown of the vibrating machine (2) at vibration frequencies below the operating frequency (f_{B}), and an open or closed, non-restricting or only slightly restricting position in operation of the vibrating machine (2) at its operating frequency (f_{B}).

20. A method of operating a vibrating machine (2) having the features of one or more of Claims 1, 3 to 19, unless dependent on claim 2,
**characterized in that**
a current vibration frequency of the first vibratory machine part (21) is detected, and that the/each throttle (13) is adjusted as a function of the detected vibration frequency between a restricting position, with the/each air spring (10) being damped, during startup and rundown of the vibrating machine (2) at vibration frequencies below the operating frequency (f_{B}), and a non-restricting open or closed position, with the/each air spring (10) in either case not being damped in operation of the vibrating machine (2) at its operating frequency (f_{B}).

## Revendications

1. Machine vibrante (2) dotée d'une première pièce mécanique (21) vibrante quand la machine est en marche, dotée d'une deuxième pièce mécanique (22) reliée à une superficie hors tout de ladite machine vibrante (2) et d'un entraînement de vibrations (20), étant disposé entre lesdites pièces mécaniques (21, 22) un système de support (1) amortissant qui présente, par point de support, au moins un ressort pneumatique (10) et au moins un réservoir d'air comprimé (11) relié par conduite d'écoulement audit ressort pneumatique (10), et un étranglement (13) étant monté entre ledit ressort pneumatique (10) et ledit réservoir d'air comprimé (11),
**caractérisée en ce**
**que** le système de support (1) présente, avec la première pièce mécanique (21) vibrante, une fréquence de résonance ou propre (f_{R}) inférieure à une fréquence de fonctionnement (f_{B}) de la machine vibrante (2), que le système de support (1) présente, en fonction de la fréquence, un niveau de rigidité inférieur auquel l'amortissement est élevé aux basses fréquences, un niveau de rigidité supérieur auquel l'amortissement est faible à hautes fréquences, et une zone intermédiaire située entre les deux à une fréquence intermédiaire (f_{Ü}), et que le/chaque étranglement (13) est dimensionné de sorte que la fréquence intermédiaire (f_{Ü}) se rapproche de la fréquence de résonance ou propre (f_{R}), en est de préférence légèrement supérieure étant le système de support (1) possède une fréquence de résonance ou propre (f_{R}) qui atteint au maximal la demi-fréquence de fonctionnement (f_{B}) de la première pièce mécanique vibrante (21) de la machine vibrante (2).

2. Machine vibrante (2) selon la revendication 1, **caractérisée en ce que** l'étranglement (13) est un étranglement non-ajustable.

3. Machine vibrante (2) selon la revendication 1, **caractérisée en ce que** l'étranglement (13) est ajustable.

4. Machine vibrante (2) selon la revendication 3, **caractérisée en ce que** l'étranglement (13) peut, en fonction d'une fréquence de vibration détectée de la première pièce mécanique (21) vibrante, être commuté entre une position d'étranglement et une position de non-étranglement.

5. Machine vibrante (2) selon la revendication 3, **caractérisée en ce que** l'étranglement (13) peut, en fonction d'une fréquence de vibration détectée de la première pièce mécanique (21) vibrante, être commuté de manière discontinue ou en plusieurs étapes entre des positions plus ou moins ouvertes, d'étranglement et amortissant les ressorts pneumatiques (10) d'une part, et une position de non-étranglement d'autre part.

6. Machine vibrante (2) selon la revendication 4 ou 5, **caractérisée en ce que** la position de non-étranglement de l'étranglement (13) en est sa position complètement ouverte, dans laquelle il y a présence d'une liaison d'écoulement non étranglée, n'amortissant pas le ressort pneumatique (10), entre ledit ressort pneumatique (10) et le réservoir d'air comprimé (11), ou que la position de non-étranglement de l'étranglement (13) en est sa position complètement fermée, à laquelle l'étranglement (13) bloque une liaison d'écoulement entre le ressort pneumatique (10) et le réservoir d'air comprimé (11).

7. Machine vibrante (2) selon l'une quelconque des revendications 4 à 6, **caractérisée en ce que** l'étranglement (13), à des fréquences de vibrations survenant au cours d'une mise en marche et d'un arrêt de la machine vibrante (2), prend une position d'étranglement amortissant le ressort pneumatique (10), et prend, lorsque la machine vibrante (2) est en marche, à la fréquence de fonctionnement (f_{B}) de celle-ci, une position soit complètement ouverte soit fermée n'amortissant en aucun des deux cas le ressort pneumatique (10).

8. Machine vibrante (2) selon l'une quelconque des revendications 1 à 7, **caractérisée en ce qu'**une source d'air comprimé (14) est reliée au réservoir d'air comprimé (11) et/ou au ressort pneumatique (10), et que ladite source d'air comprimé (14) permet d'ajuster une pression d'air de base prédéterminable et modifiable dans le réservoir d'air comprimé (11) et dans le ressort pneumatique (10)

9. Machine vibrante (2) selon l'une quelconque des revendications 1 à 8, **caractérisée en ce qu'**elle présente respectivement un ressort pneumatique (10) par point de support.

10. Machine vibrante (2) selon la revendication 9, **caractérisée en ce que** les ressorts pneumatiques (10) de tous les points de support sont dirigés dans la même direction, de préférence dans la direction verticale.

11. Machine vibrante (2) selon l'une quelconque des revendications 1 à 8, **caractérisée en ce qu'**elle présente respectivement deux ressorts pneumatiques (10) agencés par paire par point de support.

12. Machine vibrante (2) selon la revendication 11, **caractérisée en ce que** les deux ressorts pneumatiques (10) de chaque paire sont positionnés l'un par rapport à l'autre dans un angle allant jusqu'à 90° .

13. Machine vibrante (2) selon la revendication 12, **caractérisée en ce que** les deux ressorts pneumatiques (10) de chaque paire sont dirigés symétriquement l'un par rapport à l'autre dans des angles identiques allant jusqu'à 45° par rapport à la verticale.

14. Machine vibrante (2) selon l'une quelconque des revendications 1 à 13, **caractérisée en ce qu'**un seul réservoir d'air comprimé (11) commun et un seul étranglement (13) commun sont associés à tous les étranglements (10).

15. Machine vibrante (2) selon l'une quelconque des revendications 1 à 13, **caractérisée en ce qu'**un propre réservoir d'air comprimé (11) et un propre étranglement (13) sont associés à chaque ressort pneumatique (10).

16. Machine vibrante (2) selon l'une quelconque des revendications 12 à 13, **caractérisée en ce qu'**un réservoir d'air comprimé (11) commun et un étranglement (13) commun sont respectivement associés aux deux ressorts pneumatiques (10) de chaque paire.

17. Machine vibrante (2) selon l'une quelconque des revendications 3 à 16, **caractérisée en ce que** le/chaque étranglement (13) ajustable est constitué d'une soupape d'étranglement ajustable en sa section de passage ou par une conduite d'étranglement ajustable dans sa longueur d'écoulement.

18. Machine vibrante (2) selon l'une quelconque des revendications 1 à 17, **caractérisée en ce que** le/chaque réservoir d'air comprimé (11) présente un volume modifiable ajustable ou qu'un ou plusieurs réservoir(s) d'air comprimé supplémentaire(s) (11') reliable(s) par conduite d'écoulement à et détachable par conduite d'écoulement de celui-ci est/sont associé(s) audit/à chaque réservoir d'air comprimé (11).

19. Machine vibrante (2) selon l'une quelconque des revendications 1, 3 à 18, **caractérisée en ce qu'**il lui est associée une unité de commande (3) permettant de détecter une fréquence de vibration actuelle de la première pièce mécanique vibrante (21) et d'ajuster automatiquement le/chaque étranglement (13) en fonction de la fréquence de vibration détectée entre une position d'étranglement au cours d'une phase de mise en marche et d'arrêt de la machine vibrante (2) à des fréquences de vibration inférieures à la fréquence de fonctionnement (f_{B}) et une position ouverte ou fermée, à étranglement inexistant ou faible lorsque la machine vibrante (2) est en marche à sa fréquence de fonctionnement (f_{B}).

20. Procédé d'exploitation d'une machine vibrante (2) qui présente les caractéristiques d'une ou de plusieurs des revendications 1, 3 à 19, dans la mesure où elle ne dépend pas de la revendication 2,
**caractérisé en ce**
**qu'**une fréquence de vibration actuelle de la première pièce mécanique vibrante (21) est détectée et que le/chaque étranglement (13) est ajusté en fonction de la fréquence de vibration détectée entre une position d'étranglement, amortissant le/chaque ressort pneumatique (10) au cours d'une mise en marche et d'un arrêt de la machine vibrante (2) à des fréquences de vibration inférieures à la fréquence de fonctionnement (f_{B}), et une position ouverte de non-étranglement ou fermée de non-amortissement du ressort pneumatique (10) au cours du fonctionnement de la machine vibrante (2) à sa fréquence de fonctionnement (f_{B}).
